## Europäisches Patentamt
## European Patent Office
## Office européen des brevets

(19)

(11) **EP 1 693 745 A1**

(12) **EUROPEAN PATENT APPLICATION**
published in accordance with Art. 158(3) EPC

(43) Date of publication:
**23.08.2006 Bulletin 2006/34**

(51) Int Cl.:
*G06F 9/44* (2006.01)

(21) Application number: **04788038.0**

(22) Date of filing: **22.09.2004**

(86) International application number:
**PCT/JP2004/013855**

(87) International publication number:
**WO 2005/029323 (31.03.2005 Gazette 2005/13)**

(84) Designated Contracting States:
**AT BE BG CH CY CZ LI**

(30) Priority: **22.09.2003 JP 2003330772**

(71) Applicant: **Catena Corporation**
**Tokyo 135-8565 (JP)**

(72) Inventors:
• **MEJRI, Mohamed**
  **Quebec G1K7P4 (CA)**

• **KTARI, Bechir**
  **Quebec G1K7P4 (CA)**
• **FUJITA, Hamido,**
  **Software & Info. Science Dept.**
  **Takizawa,**
  **Iwate-gun,**
  **Iwate 0200 (JP)**

(74) Representative: **Maiwald Patentanwalts GmbH**
  **Neuer Zollhof 2**
  **40221 Düsseldorf (DE)**

(54) **SOFTWARE GENERATION METHOD**

(57) To formalize, using process algebra, the process of automatic generation of software together with the semantics of Lyee generated software.

The present invention includes: a first step of declaring (defining) a user requirement to be mounted as one program as statements declared by word and grouped by logical record, each of which has a word name, a definition expression, a condition for executing the definition expression, an input/output attribute, and an attribute of a value of the word; a second step of preparing, from the statements by word, signification vectors ($L_2$, $L_3$, $L_4$) and action vectors ($I_2$, $O_4$, $S_4$), each of which is a modules of a process cell having input/output channels based on the Lyee-calculus; a third step of assembling the signification vectors and the action vectors into a set having the set condition that interactions among it is caused by a command from the same screen; a fourth step of placing one control function module $\Phi$ to each of the sets; and a fifth step of placing one control function module $\Psi$ in the program.

[Fig. 15]

EP 1 693 745 A1

**Description**

[Technical Field]

The present invention relates to a software generating method, more particularly to a software generating method using formalization by process algebra in the Lyee methodology.

[Background Art]

Over the last years, various methodologies and techniques have been elaborated and proposed to improve one or many aspects related to the software development life cycle. However, despite the great effort in this research field, the production of clearly understood and modifiable systems is still an ambitious goal and far from reached. This is due, on one hand, to the complexity and the subtlety of software themselves and, on the other hand, to the limitations of the current methodologies. Recently, a new and very promising methodology, called Lyee (trademark), has been proposed. Intended to deal efficiently with a wide range of software problems related to different field, Lyee allows the development of software by simply defining their requirements.

Nevertheless, since both the semantics of Lyee generated software together with the process of automatic generation of software from requirements are described using informal language, difficulties and confusions may arise when trying to understand and study this methodology.

[Non-Patent Document 1]

J. A. Bergstra and J.W. Klop. Algebra of communicating processes with abstraction. Theoretical Computer Science, 37(1):77-121, 1985.

[Non-Patent Document 2]

G. Berry and G. Boudol. The chemical abstract machine. Theoretical Computer Science, 96(1):217-248, 1992.

[Non-Patent Document 3]

C. A. R. Hoare. Communicating Sequential Processes. Prentice Hall International Series in Computer Science. Prentice Hall, 1985.

[Non-Patent Document 4]

M. Mejri, B. Ktari, and M. Erhioui. Static analysis on Lyee-oriented software. In Hamido Fujita and Paul Johannesson, editors, New Trends in Software Methodologies, Tools and Techniques, pages 375-394. IOS Press, 2002. Proceedings of 1st International Workshop on Lyee Methodology, Paris.

[Non-Patent Document 5]

R. Milner. A calculus of communicating systems. Lecture Notes in Computer Science 92, Berlin, 1980. Springer-Verlag.

[Non-Patent Document 6]

F. Negoro. Principle of Lyee software. 2000 International Conference on Information Society in 21st Century (IS2000), pages 121-189, November 2000.

[Non-Patent Document 7]

F. Negoro. Introduction to Lyee. The Institute of Computer Based Software Methodology and Technology, Tokyo, Japan, 2001.

[Non-Patent Document 8]

F. Negoro and I. Hamid. A proposal for intention engineering. 5th East-European Conference Advances in Databases and Information System (ADBIS'2001), September 2000.

[Non-Patent Document 9]

F. Negoro and I. Hamid. A proposal for intention engineering. International Conference on Advances in Infrastructure for Electronic Business, Science, and Education on the Internet (SSGRR 2001), 2001.

[Disclosure of the Invention]

[Problems to be Solved by the Invention]

The main purpose of this invention is first to formalize, using process algebra, the process of automatic generation of software together with the semantics of Lyee generated software. Actually, the process algebra naturally supports many concepts of the Lyee methodology and consequently formalizes them simply and elegantly. Moreover, a second purpose is to offer the Lyee methodology an abstract machine more suitable than the Von-Newman one. In fact, this new abstract machine considers a program as a chemical solution when molecules (different vectors of the Lyee methodology) interact together to reach a collective goal.

[Means for Solving the Problem]

To solve such problem, the present invention comprises: a first step for making a statement (defining) a user requirement to be mounted as one program by a word name, a definition equation, conditions for executing the definition equation, input/output attributes, and an attribute of a value of a word for every logical unit and for every word of the logical unit; a second step for preparing, from the statement of the word unit, a signification vector ($L_2$, $L_3$, $L_4$) and an action vector ($I_2$, $O_4$, $S_4$) formed into a module as a process cell comprising an input/output channel by Lyee-calculus; a third step for assembling the signification vector and the action vector into a set having set conditions that an interaction is caused by a command from an identical screen; a fourth step for disposing one control function module $\Phi$ for every set; and a fifth step for disposing a control function module $\Psi$ being one for every program.

A program (software) for producing "software of a development object", a program generation device, a program processing device, a tool (including both of tools as the device and the software), a software development device, a software development supporting device, or a software development and management device as one of different embodyments of the present invention may include: statement information inserting means for inserting information into an undefined portion of a signification vector ($L_2$, $L_3$, $L_4$) and an action vector ($I_2$, $O_4$, $S_4$) formed into a module as a process cell comprising an input/output channel by Lyee-calculus, the information being obtained by forming the user requirement to be mounted as one program into information as a statement inclusing a word name, a definition equation, conditions for executing the definition equation, input/output attributes, and an attribute of a value of a word for every logical unit and for every word of the logical unit; control function $\Phi$ disposing means for associating the signification vector and the action vector with a set unit having set conditions that an interaction is caused by a command from from an identical screen so that one control function module $\Phi$ controls the set unit; and control function $\Psi$ disposing means for associating one control function module $\Psi$ with the control function $\Phi$ so as to control the control function $\Phi$.

The present invention is also realized by the software produced by the above-described "method of producing software of the development object", a recording medium on which the software is mounted, or a device (hardware) on which the software is mounted. In this case, the present invention may comprise: a module group obtained by inserting information into an undefined portion of a signification vector ($L_2$, $L_3$, $L_4$) and an action vector ($I_2$, $O_4$, $S_4$) formed into a module as a process cell comprising an input/output channel by Lyee-calculus, the information being obtained by forming the user requirement to be mounted as one program into information as a statement inclusing a word name, a definition equation, conditions for executing the definition equation, input/output attributes, and an attribute of a value of a word for every logical unit and for every word of the logical unit; one or a plurality of control function modules $\Phi$ which associate the module group with a set unit having set conditions that an interaction is caused by a command from an identical screen so as to control the module group by one control function module $\Phi$; and a control function module $\Psi$ which associates a control function $\Phi$ so as to control the control function by one control function module $\Psi$.

Furthermore, the present invention is also realized as software which is a model of a software code for use in producing software by the above-described "method of producing the software of the development object", as a recording medium on which the software is mounted, or as a device (hardware) on which the software is mounted. In this case, the present invention may be realized as a model which can be coded as software comprising: a model of a signification vector ($L_2$, $L_3$, $L_4$) and an action vector ($I_2$, $O_4$, $S_4$) formed into a module as a process cell comprising an input/output channel by Lyee-calculus, the model having an undefined portion into which information is to be buried, the information being obtained by forming a user requirement to be mounted as one program into information as a statement including a word name, a definition equation, conditions for executing the definition equation, input/output attributes, and an attribute of a value of a word for every logical unit and for every word of the logical unit; a model of a control function module Φ having a function of controlling, with one control function module Φ, the signification vector and the action vector into whose undefined portion the information of the statement is inserted, for every a set unit having set conditions that an interaction is caused by a command from an identical screen; and a model of a control function module Ψ having a function of controlling the control function Φ by one control function module Ψ.

Furthermore, the present invention can be realized, by the above-described "method of producing the software of the development object", as any of a method of extracting information (document (paper, data)) extracted from a requirement, as the information (document (paper, data)) extracted by such extraction method, as a method of using the extracted information, as an information recording medium on which these information is mounted, as a software in which an information extracting/using method is coded, and as a recording medium/device (hardware) on which the software is mounted. In these cases, the present invention may be realized as information extracted from a software development requirement, comprising: information obtained by forming a user requirement to be mounted as one program into information as a statement including a word name, a definition equation, conditions for executing the definition equation, input/output attributes, and an attribute of a value of a word for every logical unit and for every word of the logical unit, the information being to be inserted into an undefined portion of a model of a signification vector ($L_2$, $L_3$, $L_4$) and an action vector ($I_2$, $O_4$, $S_4$) formed into a module as a process cell comprising an input/output channel by Lyee-calculus; information for associating the signification vector and the action vector into whose undefined portion the information of the statement has been inserted with a set unit having set conditions that an interaction is caused by a command from an identical screen so as to control the vectors by one control function module Φ; and information which associates the control function Φ so as to control the function by one control function module Ψ.

It is to be noted that for the logical unit, Japanese Patent Application No. 2004-272400 by the same applicant is referred to, the contents of which are to be incorporated herein by reference.

[Advantages of the Invention]

A wide range of software problems related to different fields are efficiently dealt with, and development time, maintenance time, and documentation volume can be considerably reduced by using Lyee (as much as about 70 to 80%) as compared with conventional methodologies.

[Best Modes for Carrying Out the Invention]

Lyee Methodology: A Formalization using Process Algebra

Abstract: Over the last years, various methodologies and techniques have been elaborated and proposed to improve one or many aspects related to the software development life cycle. However, despite the great effort in this research field, the production of clearly understood and modifiable systems is still an ambitious goal and far from reached. This is due, on one hand, to the complexity and the subtlety of software themselves and, on the other hand, to the limitations of the current methodologies. Recently, a new and very promising methodology, called Lyee, has been proposed. Intended to deal efficiently with a wide range of software problems related to different field, Lyee allows the development of software by simply defining their requirements.

Nevertheless, since both the semantics of Lyee generated software together with the process of automatic generation of software from requirements are described using informal language, difficulties and confusions may arise when trying to understand and study this methodology.

The main purpose of this invention is first to formalize, using a process algebra, the process of automatic generation of software together with the semantics of Lyee generated software. Actually, the process algebra naturally supports many concepts of the Lyee methodology and consequently formalizes them simply and elegantly. Moreover, a second purpose is to offer the Lyee methodology an abstract machine more suitable than the Von-Newman one. In fact, this new abstract machine consider a program as chemical solution when molecules (different vectors of the lyee methodology) interact together to reach a collective goal.

1. Introduction

Producing easily and quickly software with high qualities is the basic concern of the software development research field. Over the last years, various methodologies and techniques have been elaborated and proposed to improve one or many aspects related to the software development life cycle. However, despite the great effort in this research field, the production of clearly understood and modifiable systems is still an ambitious goal and far from reached. This is due, on one hand, to the complexity and the subtlety of software themselves and, on the other hand, to the limitations of the current methodologies. In fact, almost all of the proposed methodologies fail to produce clearly understood and modifiable systems and their use is still considered to be an activity accessible only to specialists with a large array of competencies, skills, and knowledge. This, in turn, leads to highly paid personal, high maintenance costs, and extensive checks needing to be performed on the software. For these reasons, companies are likely to welcome any new methodology promising demonstrable improvement in the software development cycle.

Recently, a new and very promising methodology, called Lyee (read as "lee", tail-character word of "governmentaL methodologY for softwarE providencE")(see, Non-Patent Documents 6, 7, 8, and 9), has been proposed. Intended to deal efficiently with a wide range of software problems related to different fields, Lyee allows the development of software by simply defining its requirements. More precisely, a developer has only to provide words, calculation formulae, calculation conditions (preconditions) and layout of screens and printouts, and then leaves in the hands of the computer all subsequent troublesome programming process (e.g., control logic aspects). Despite its recency, the results of the use of Lyee have shown tremendous potential. In fact, compared to conventional methodologies, development time, maintenance time and documentation volume can be considerably reduced by using Lyee (as much as 70 to 80%) (see, Non-Patent Document 7). In Non-Patent Document 4, we proposed some classical static analysis techniques in order to improve many aspects of this methodology, in particular Lyee requirements.

Nevertheless, since both the semantics of Lyee generated software together with the process of automatic generation of software from requirements are described using informal language, difficulties and confusions may arise when trying to understand and study this methodology. In addition, the ideas behind this methodology are described using a sequential language which is not appropriate to support them. In fact, a Lyee generated software is basically made of small components (called vectors in Lyee terminology), where each one has an atomic goal (goal of the vector), that collaborates together by interaction in order to produce the desired results (global goal: the whole goal). It is, however, commonly known that a process algebra which naturally supports concurrency (a plurality of calculation subjects operate while exchanging information with one another) and communication is the intrinsically appropriate language to specify concurrent components and therefore it will provide a formal and worthy foundation to support the Lyee methodology concepts. Among other benefic consequences of using the process algebra in the Lyee methodology, many components (complete vectors or parts of vectors) of the actual version of Lyee will no longer be required. This is because these components, described by the sequential language, have been required by all means for controlling an order of executing a certain group of processes, but their functions are naturally supported by process algebra which supports the process concurrency and communication. Actually, the routing vectors are no longer needed. Thus, we obtain a formal description of Lyee that is simple and that produce program shorter and consuming less time and memory. Besides, this formal description will be an inevitable start point for many interesting analysis of diverse aspects of this methodology. For instance, to optimize the Lyee generated software or the software generation processes, we need a formal proof that the optimized program is equivalent to its original version. Formal equivalence checking or more generally model checking can be elegantly achieved when using process algebra.

In this paper, we first define a formal process algebra, called Lyee-calculus, that easily and naturally supports the basic concepts of the Lyee methodology. In fact, this calculus can be seen as an abstract machine (abstracted concept of a computer) which is more suitable to support the Lyee methodology concepts than the Von Newman one. This machine considers a program as a set of molecules that interact together to produce a final result. Secondly, we show how this calculus can formalize and simplify both the Lyee components (referred to as vectors in Lyee) together with the whole software generation process of the Lyee methodology. Actually, we have formalize the whole process of the automatic generation of Lyee software generation.

The remainder of this paper is organized as follows. In Section 2, we define the syntax and the semantics of the Lyee-calculus. In Section 3, we give a short and technical introduction to the Lyee methodology and an overview of its formalization using the Lyee-calculus. In Section 4, we propose a detailed and complete formalization of the Lyee methodology using Lyee-calculus. In Section 5, we present one case study that concretely shows both how a program is automatically generated from simple requirement together with a step-by-step description of the execution of the generated program. Finally, Section 6 provides concluding remarks on this work, and discusses some future work.

2. Lyee-Calculus

Process algebra is a formal description technique for complex computer systems, especially those involving communicating, concurrently executing components (see, Non-Patent Document 1, 3, 5). Process algebra is generally referred as calculus in the literature since it involves a variety of mathematical and logic concepts (concurrency theory, operational semantics, complexity theory, logic, etc.) that goes beyond the process algebra field.

In this section, we give the syntax and the semantics of a new calculus, called Lyee-calculus, that we have specially define to formalize the Lyee methodology.

2.1 Syntax

Lyee-calculus programs are systems composed of independent and parallel processes that communicate using hand-shake technique (a technique to achieve communication between two processes by setting one process be ready to receive and the other be ready to send) on named channels.
The channel can be restricted so that only some process can communicate on them. A process can send a value $\upsilon$ through a channel $\iota$ by doing the action $[\iota !e]$ ($\upsilon$ corresponds to the valuation of e). Similarly, a process can receive a value of e from a channel $\iota$ by doing the action $[\iota ?e]$.

A process can also perform a silent action $\iota$ This special action is intended to represent an internal behavior of a system such as synchronization between processes (a phenomenon in communication between processes, where one process sends a value or the like and at the same time the other process receives it). The action is useful to capture indeterminism in process evolution, that is, in a case where there are a plurality of process alternatives, and it cannot be predicted which process is to be executed (refer to the description of "selection" of Process Syntax Definition 1 described later).

The process syntax will be defined as follows.

<Syntax 1>

[eq. 1]

$$P, Q ::= [K].P \mid (P \mid Q) \mid P + Q \mid P \triangleright Q \mid P / L \mid . A(\vec{X}) \overset{def}{=} P \mid nil$$

<Syntax 2>

$$K, K_1, K_2 ::= \{\kappa\} \mid K_1 \cup K_2$$

<Syntax 3>

[eq. 2]

$$L, L_1, L_2 ::= 0 \mid \{\iota\} \mid L_1 \cup L_2 \mid$$

<Syntax 4>

$$\kappa ::= \iota !e \mid \iota ?e \mid \tau \mid$$

The meanings of symbols for use in the above syntaxes and the intuitive meaning of each syntactic construction are as follows.

<Syntax 1>

[Table 1]

| Symbol | Definition |
|--------|-----------|
| P, Q | Processes |
| : : = | The left side of the symbol is defined as the right side |
| I | Or |
| [K].P | Sequence |
| K | Set of actions |
| P \| Q | Parallel composition |
| P + Q | Choice |
| P▷Q | Guarded choice |
| P/ L | Restriction |
| $A(\vec{X}) \stackrel{def}{=} P$ | Definition |
| *nil* | nil process |

Syntax 1 has the following intuitive meaning. That is, if there are processes P and Q, relations between them and their contents are defined as any of the followings: sequence ([K].P); parallel composition P | Q); choice (P + Q); guarded choice (P▷Q); restriction (P/ L); definition; and nil process (*nil*), where the definition
$$[eq. \ 3]$$

$$\stackrel{def}{=}$$

means that the left side of this symbol is defined by the right side.
Interpretation of each syntactic constuction will be described later.

<Syntax 2>

[Table 2]

| Symbol | Definition |
|--------|-----------|
| K, $K_1$, $K_2$ | Set of actions |
| $\kappa$ | Action |
| { $\kappa$ } | Set of a single action (Single action) |
| $K_1$ U $K_2$ | Union of Sets of actions (Set union) |

Syntax 2 has the following intuitive meaning. That is, when there are sets of actions K, $K_1$, and $K_2$, those sets are any of the followings: a set including a single action as an element ({$\kappa$}); a union of sets of actions ($K_1 \cup K_2$).

<Syntax 3>

[Table 3]

| Symbol | Definition |
|---|---|
| L, $L_1$, $L_2$ | Set of channels |
| 0 | Empty set |
| ι | Channel |
| {ι} | Set of a single channel (Single channel) |
| Li U $L_2$ | Union of Sets of channels (Set union) |

Syntax 3 has the following intuitive meaning. That is, when there are sets of channels L, $L_1$, and $L_2$, these sets are any of the followings: an empty set (0), a set including only a single channel as an element ({i}); a union of sets of channels ($L_1 \cup L_2$).

<Syntax 4>

[Table 4]

| Symbol | Definition |
|---|---|
| κ | Action |
| ι !e | Send action (send the result of evaluation of the arithmetic expression e on the channel ι ) |
| ι ?e | Receive action (receive the value of the arithmetic expression e on the channel ι ) |
| τ | Silent action |
| ι, Ɉ | Channel |
| e | Arithmetic expression |

Syntax 4 has the following intuitive meaning. That is, when there is an action κ, the action is any of the followings: a transmitting action (ι !e) to send a value of a calculation result of an expression e on a channel ι ; a receiving action (ι ?e) to receive the value of the expression e on the channel ι ; and a silent action (τ).
The meaning of the syntactic construction defined in Syntax 1 will be described in detail.

1) [K].P: Sequence

Process [K].P , where K is a set of actions, is a process that has to perform all the action in K and then behaves as the process P. The order in which the actions in K have to be executed is not important. Notice that for the sake of simplicity we write $[\kappa_1, \ldots, \kappa_n]$ instead of $[\{\kappa_1, \ldots, \kappa n\}]$.

2) P|Q: Parallel composition

Process P|Q behaves as processes P and Q running in parallel. Each one of them may interact with the other on channels known to both, or with the outside world (environment or the end-user) independently from the other. When two processes synchronize (sending of a value or the alike from a certain process and receiving of it by the other process occurs at the same time) on the same channel, the whole process will perform an action τ (silent action) and thereafter behave as the remaining process. For instance, let's take the following process:
```
P  =  P1  |  P2
```

with P1 and P2 defined as follows:

[eq. 4]

$$P1 \stackrel{def}{=} [t!4].P1'$$
$$P2 \stackrel{def}{=} [t?x].P2'$$

The above equation has an intuitive meaning that P1 is a process which transmits a value 4 to the channel t, and thereafter behaves as process P1'. P2 is a process which waits until a value of an equation x is given to the channel t, receives the value when given, and thereafter behaves as process P2'.

Then, process P performs the silent action τ at a time when the processes P1 and P2 are synchronized (actually P1 sends the value 4 and simultaneously P2 receives the value), and behaves as the remaining process P1' | P2'. Semantically, we will note this transition as follows:

[eq. 5]

$$P \stackrel{\tau}{\rightarrow} P1' \mid P2'$$

This equation intuitively means that as a result of an interaction in the process p, the silent action τ is executed, and the whole process shifts to the parallel process P1'|P2'.

The relation,

[eq. 6]

$$\stackrel{\kappa}{\rightarrow}$$

will be formally defined later within this section.

3) P+Q : Choice

Process P + Q is the process that behaves as Process P or as Q. The choice of the process to be executed is determined deterministically (made by the environment) if both P and Q do not begin with a silent action, otherwise the choice is not determined.

4) P 9 Q: Guarded choice

Process P 9 Q is the process that behaves as P until process Q is activated. Whenever the latter Q is activated, P is stopped and cleared from memory.

5) P/L: Restriction

Process P/L is the process that behaves as P except that it can communicate with the environment by use of channels given to a channel set L only.

6) Symbols of Equation 3: Definition

For example, the symbols of Equation 3 can make definitions represented by the following equation.
[eq. 7]

$$A(\vec{X}) \stackrel{def}{=} P$$

wherein A denotes a process identifier,
[0065]

[eq. 8]

$$\vec{X}$$

are variables (parameters) of the Process A, and it is defined that the process of the left side is equal to the process P of the right side. The process P may recursively involve A.

7) nil: nil process

Nil is the process that cannot perform any action. In other words, this is a dead process.
When a certain process ends, the process usually turns to a nil process. When a process ends, thereby resulting in a nil process, the process is not activated any more. Therefore, even if conditions for executing an action are satisfied, any action cannot be executed.

2.2 Modeling of Process to hold Value

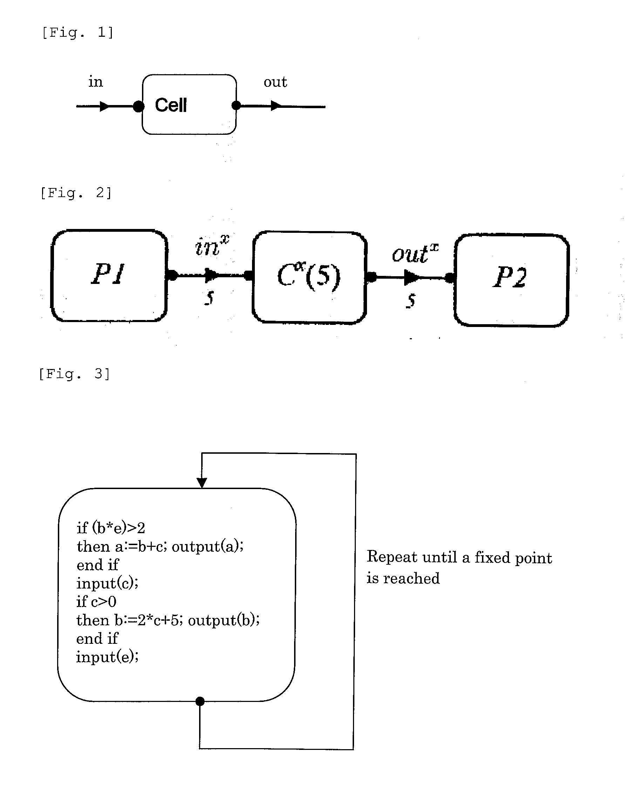

In this section, we show how to model a value-holding cell of memory as a process that interacts with its environment through its communication channels. As shown by Fig. 1, we consider that the memory cell has two ports (channels) of communication, in and out. The basic task of this memory cell is to infinitely wait a value on channel in and to make it available on channel out. The memory cell may output the same value to the channel out as much as necessary until a new value is input into the channel in. The channels themselves do not hold any value.
We write the process cell $C^x(\upsilon)$, meaning that the memory cell x holds the value u, as follows:
[eq. 9]

$$C'^x(v) \stackrel{def}{=} [in^x?y].C'^x(y) + [out^x!v].C'^x(v)$$

This formal description intuitively means that the process $C^x(\upsilon)$ holding the value u behaves as a process $C^x(y)$ (i.e., the held value is changed from u to the value of the equation y), when receiving the value of the equation y in a channel $in^x$. When the held value u is communicated to a channel $out^x$, the process behaves as the process $C^x(\upsilon)$ while holding the value u even after the transmitting action.

By capturing a memory cell as a process holding the value, we can further add intelligence to it. For instance, we can write a cell that does not allow the access to its contents until it will be initialized (initial value is received). This smart cell having an information processing capability can be defined as follows:

[eq. 10]

$$Cell(x) \stackrel{def}{=} [in^x?y].C^x(y)$$

A process Cell(x) is a process which behaves as a process $C^x(y)$ holding the value of the equation y, after receiving the value of the equation y in the channel $in^x$ (the process receives the value in the equation y, holds the value of the equation y, and does not transmit any value).

Now, giving two processes defined as follows:

[eq. 11]

$$P1 \stackrel{def}{=} [in^x!5].nil$$
$$P2 \stackrel{def}{=} [out^x?y].nil$$

The process P1 is a process (process to transmit value 5) which transmits a value 5 to the channel $in^x$, and turns to nil (ends). The process P2 is a process (process to receive the value in the equation y) which turns to nil (ends) after receiving the value of the equation y in the channel $out^x$.

It is easy to write a program where these two processes communicate through a cell x ($C^x$):

```
P1 | Cell(x) | P2
```

This program is a program in which the processes P1, Cell(x), and P2 are executed in parallel.

Fig. 2 shows interactions among all the above involved processes.

Here are the different steps of that program execution:

[eq. 12]

$$
\begin{aligned}
P1 \mid Cell(x) \mid P2 \;&=\; [in^x!5].nil \mid [in^x?y].C^x(y) \mid [out^x?y].nil \\
&\stackrel{\tau}{\to}\; C^x(5) \mid [out^x?y].nil \\
&=\; \left( [in^x?y].C^x(y) + [out^x!5].C^x(5) \right) \mid [out^x?y].nil \\
&\stackrel{\tau}{\to}\; C^x(5)
\end{aligned}
$$

The above equation intuitively means that the process P1|Cell(x)| P2 is executed through the following first and second steps. An underline indicates a transmitting/receiving action which causes the interaction (synchronization) (the right side denoted with an equal symbol indicates one step).

<First Step>

Three processes are performed in parallel: (1) [in$^x$!5].nil (transmitting value 5 to channel in$^x$) ; (2) [in$^x$?y]. C$^x$(y) (receiving the value to be given to the equation y in the channel in$^x$, and holding the value of the equation y in a cell x after the receiving) ; and (3) [out$^x$?y] .nil (receiving the value of the equation y in the channel out$^x$) . As a result, the interaction (synchronization) among the processes occurs: (1) completes the transmission of the value 5 to the channel in$^x$ at the same time (2) receives the value 5 in the channel in$^x$, and the silent action $\tau$ is executed. The process shifts to a parallel process of two processes: (4) C$^x$ (5) (holding the value 5 in the cell x) ; and (3) [out$^x$?y].nil (receiving the value of the equation y in the channel out$^x$).

<Second Step>

From the above definition of the equation 9, (4) C$^x$(5) can be replaced with a selection process (4)-1 ([in$^x$? y] .C$^x$(y)+[out$^x$!5] .C$^x$(5)). That is, the processes (4)-1 and (3) are performed in parallel. As a result, the interaction (synchronization) occurs: (3) (receiving the value 5 of the equation y in the channel out$^x$) occurs simultaneously with (4)-1 [out$^x$!5] .C$^x$(5) (transmitting the value 5 to the channel, and the silent action $\tau$ is executed. As a result, the remaining process behaves as C$^x$(5) (holding the value 5 in the cell x).

2.3 Semantics

Hereafter, we give the formal semantics of the Lyee-calculus. This semantics is defined by the interaction relation,
**[0088]**

$$[\text{eq. 13}]$$

$$\xrightarrow{\kappa}$$

At this time, an operator $\rightarrow$ denotes a "relation", and $\kappa$ denotes an action. The "relation" is a set of a plurality of "relations", and each "relation" which is an element of a set is constituted of the following three constituents. A first constituent is a "process before changed", a second constituent is a "process after changed", and a third constituent is an "action executed during the change".
$$[\text{eq. 14}]$$

$$P \xrightarrow{\kappa} Q$$

wherein the three constituents of the relation $\rightarrow$ are (P, Q, K) .

In the above definition, the equation 14 means that there is a reaction amongst the sub-process P such that the whole process can execute the atomic action (a series of undivided actions that does not permit any interrupt, and has to be necessarily completed in order to start the next action separately) $\kappa$ and becomes the sub-process Q. The interaction relation is an original idea inspired by the Chemical Abstract Machine of Berry and Boudol (see, Non-Patent Document 2). In this model, a process is considered as a chemical solution of molecules waiting to interact.

To formally introduce the relation of the equation 13, we need to define the following notions:
[eq. 15]

$$\looparrowright$$

The above is a symbol for use in simplifying the process, and indicates that the left side is equal to the right side which is a simplified process. The process can be simplified by eliminating the nil process as follows:

[eq. 16]

$$P \mid nil \looparrowright P \qquad nil + P \looparrowright P \qquad nil \rhd P \looparrowright P$$
$$nil \mid P \looparrowright P \qquad P + nil \looparrowright P \qquad P \rhd nil \looparrowright P$$

$$nil/L \looparrowright nil$$

[eq. 17]

$$[\![e]\!]$$

We denote by [[e]] the set of values containing the result of the evaluation of the expression e. If e is a variable, a domain of the value of its evalutaion is the same as that of the variable (integral, real, etc.). For the sake of simplicity of the description, we consider that all variables belong to the real set.

[eq. 18]

$$\kappa_{\lfloor}$$

is the name of the channel used by the action κ, i.e:

[eq. 19]

$$\tau_{\lfloor} = \emptyset$$
$$(\imath!e)_{\lfloor} = (\imath?e)_{\lfloor} = \{\imath\}$$

The equation means that since there does not exist any channel used by the silent action $\tau$, the set is an empty set (0). A channel used by a transmitting action ($\iota\,!e$) and a receiving action ($\iota\,?e$) is $\iota$.

A set of the "relations" ($\rightarrow$) has, as elements, the least relation that satisfies 15 rules given by Table 5.

Various R symbols within parentheses are symbols indicating rule names. Each rule includes premises and a result, and obtains a result shown in the lower part of a horizontal line at a time when premises in the upper part are satisfied.

[Table 5]

$$(R_{\looparrowright})\ \frac{P\ \xrightarrow{\kappa}\ Q'\quad Q'\nrightarrow Q}{P\ \xrightarrow{\kappa}\ Q}$$

$$(R_!)\ \frac{v\in[\![e]\!]}{[\iota!e].P\ \xrightarrow{\iota!v}\ P}\qquad (R_?)\ \frac{v\in[\![e]\!]}{[\iota?e].P\ \xrightarrow{\iota?v}\ P[v/e]}\qquad (R_\tau)\ \frac{v\in[\![e]\!]}{[\tau].P\ \xrightarrow{\tau}\ P}$$

$$(R_{[\,]})\ \frac{[K_1].P\ \xrightarrow{\kappa}\ P'}{[K_1\cup K_2].P\ \xrightarrow{\kappa}\ [K_2]P'}\ \ K_2\neq\emptyset$$

$$(R_+^l)\ \frac{P\ \xrightarrow{\kappa}\ P'}{P+Q\ \xrightarrow{\kappa}\ P'}\qquad (R_+^r)\ \frac{Q\ \xrightarrow{\kappa}\ Q'}{P+Q\ \xrightarrow{\kappa}\ Q'}$$

$$(R_\triangleright^\tau)\ \frac{P\ \xrightarrow{\iota?v}\ P'\quad Q\ \xrightarrow{\iota!v}\ Q'}{P\triangleright Q\ \xrightarrow{\tau}\ Q'}\qquad (R_\triangleright^l)\ \frac{P\ \xrightarrow{\kappa}\ P'}{P\triangleright Q\ \xrightarrow{\kappa}\ P'\triangleright Q}\qquad (R_\triangleright^r)\ \frac{Q\ \xrightarrow{\kappa}\ Q'}{P\triangleright Q\ \xrightarrow{\kappa}\ Q'}$$

$$(R_|^\tau)\ \frac{P\ \xrightarrow{\iota?v}\ P'\quad Q\ \xrightarrow{\iota!v}\ Q'}{P\,|\,Q\ \xrightarrow{\tau}\ P'\,|\,Q'}\qquad (R_|^l)\ \frac{P\ \xrightarrow{\kappa}\ P'}{P\,|\,Q\ \xrightarrow{\kappa}\ P'\,|\,Q}\qquad (R_|^r)\ \frac{Q\ \xrightarrow{\kappa}\ Q'}{P\,|\,Q\ \xrightarrow{\kappa}\ P\,|\,Q'}$$

$$(R_=)\ \frac{P[\vec{Y}/\vec{X}]\ \xrightarrow{\kappa}\ P'}{A(\vec{Y})\ \xrightarrow{\kappa}\ P'}\ \ A(\vec{X})=P\qquad (R_/)\ \frac{P\ \xrightarrow{\kappa}\ P'}{P/L\ \xrightarrow{\kappa}\ P'/L}\ \ \kappa_|\in L$$

For example, the second rule ($R_!$) means that in a case where the value u belongs to a set of values of the expression e (the upper-part premises are satisfied), [$\iota\,!e$].P, that transmits the value of the expression e to the channel $\iota$ and then becomes the process P, shifts to the process P after action of sending the value u to the channel $\iota$ occurs, turns to the process P(result of the lower stage).

3. Informal Formalization of Lyee Requirements

This section presents an overview of how the Lyee methodology generates software from simple user requirements.

Besides, through this overview we progressively introduce how one can simply and efficiently formalize this methodology using the Lyee-calculus. The complete formalization of the process of software generation of the lyee methodology will be given in the next section.

3.1 Lyee requirements

Within the Lyee methodology, requirements are given in a declarative way as a set of statements containing elements such as words together with their definitions, their calculation conditions and their attributes (input/output, types, security attributes, etc.). Table 6 gives an example of Lyee requirements.

In the table, "word" indicates a word name, "Definition" indicates a definition expression for generating a value of the word, "Condition" indicates calculation conditions to execute the definition expression, and "IO" indicates attributes of input/output of the value of the word. "OF" indicates an output to a file, "OS" indicates an output to a screen, "IS" indicates an input from a screen, and IF (not shown) denotes an input from a file. "Type" denotes an attribute of the value, where "int" indicates an integer and "float" indicates a floating-point number. "Security" denotes an attribute relating to security of the value. "secret" indicates non-public level, and "public" indicates public level.
[Table 6]

| Word | Definition | Condition | IO | Type | Security |
|---|---|---|---|---|---|
|  |  | • • • |  |  |  |
| a | b -f- c | b * e > 2 | OF | int | secret |
| c |  |  | IS | float | public |
| b | 2 * c + 5 | c > 0 | OS | float | public |
| e |  |  | IS | float | public |
|  |  | • • • |  |  |  |

The requirements given in Table 6 correspond intuitively, in a traditional programming language, to the code given in Table 7. $S_a$ denotes a statement of a word a.
[Table 7]

| Statement | Code |
|---|---|
| $S_a$ | if b*e>2<br>then a:=b+c; output(a);<br>end if |
| Sc | input(c); |
| $S_b$ | if c>0<br>then b:=2*c+5; output(b);<br>end if |
| $S_e$ | input(e); |

For example, a code of the statement $S_a$ of the word a means that "if b*e>2 is true, a calculation result of b+c is substituted into the word a, and the value of the word a is output".
A code of a statement $S_c$ means "inputting the value into a word c".
Within the Lyee methodology, the user does not need to specify the order (control logic) in which these definitions will be executed. As shown in Table 7, despite the fact that the definition of word a uses word b, statement $s_b$ is listed after the statement $s_a$. As explained in the sequel, from these requirements, and independent of the order of statements, Lyee is able to generate code that computes all the defined words. This simple idea has, as shown in Non-Patent Document 6, 7, 8, and 9, multiple beneficial consequences on the different steps of software development. In fact it allows us to begin developing software even with incomplete requirements. Moreover, the user does not need to deal with any control logic of the order of executing the words unlike more classical methodologies. The control logic part of the software will be, within the Lyee methodology, automatically generated, reducing consequent programming errors and time. Flexibility is also a major benefit of the Lyee methodology since the maintenance task can be reduced to a simple modification of requirements (add, remove and/or modify words' definitions).
Consequently, Lyee systems can be viewed as collections of independent components (statements) that interact together in order to produce the desired result. In this paper, the concepts of our process algebra agree very well with this view. This is because the Lyee-calculus regards a program as a chemical solution of molecules (processes) that mutually interact together to reach the final goal. So, at a first glance, one can view a Lyee requirement LR composed of a set of statements $\{s_1, ... , s_n\}$ as a concurrent processes of the Lyee-calculus as follows.
$$LR = s_1 | \ldots | s_n$$

This will be intuitively described. A requirement LR is a process in which processes $S_1$ to $S_n$ are executed in parallel.

3.2 Pallets and Basic Structure (Scenario Function)

From the requirements in Table 6, a program can be automatically generated that computes the values of a and b and outputs them. This program will simply repeat the execution of these instructions until a fixed point is reached, i.e. any other iteration will not change the value of any word as shown in Fig. 3.

From the process algebra view point, the notion of "reaching of a fixed point" is naturally implemented within the semantic. In fact, the processes (molecules) interact together until a state of no possible evolution (fix point) is reached.

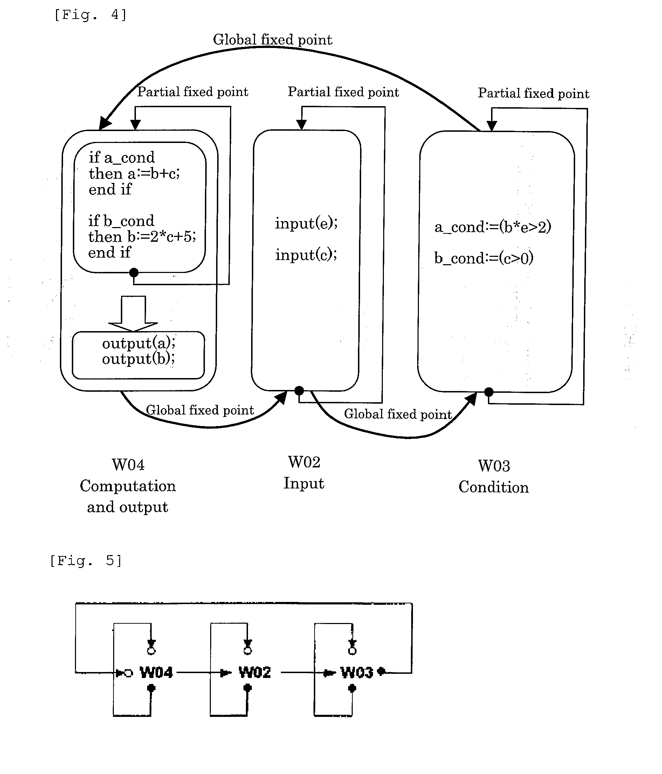

Let's be more precise about the structure and the content of the program that will be automatically generated by Lyee from requirements. Within the Lyee methodology, the execution of a set of statements, such as the ones given in Table 6, is accomplished in a particular manner. In fact, Lyee distributes the code associated with statements over three spaces, called Pallets ($W_2$, $W_{03}$ and $W_{04}$) in the Lyee terminology, as shown in Fig. 4.

Pallet $W_{02}$ processes the input words.

Pallet $W_{03}$ computes the calculation conditions of the words and saves the results in boolean variables (having a true/false value). For instance, the calculation condition "b*e>2" used in the definition of the word "a" is calculated in $W_{03}$ and the true/false result is stored in another variable "a_cond".

Pallet $W_{04}$ deals with the calculation of the words by their definition given in the requirements. Pallet $W_{04}$ also outputs the calculated values of the words.

Starting from pallet $W_{04}$, a Lyee program tries to compute the values of all the defined words until a fixed point is reached. Once there is no evolution in $W_{04}$ concerning the computation of the word values, control is given, by routing vector R4C, to pallet $W_{02}$. In its turn, this second pallet tries repeatedly to input values of words until a fixed point is reached (no other inputs are available) and then, by routing vector R2C, transfer the control to pallet $W_{03}$. Finally, and similar to pallet $W_{04}$, pallet $W_{03}$ tries to compute the calculation conditions of the words according to the requirements until a fixed point is reached. As shown in Fig. 5, this whole process ($W_{04} \rightarrow W_{02} \rightarrow W_{03}$) will repeat until a situation of overall stability is reached and the three pallet linked together are called Basic Structure (Scenario Function).

Using a sequential language to implement a Lyee requirement forces the author of the Lyee methodology to explicitly specify the order in which the pallet will be executed, the order according to which vectors (modules) in the same pallet have to be executed and how to pass control from one vector to another. In other words, this sequential language forces the introduction of some aspects that do not belong to fundamental ideas of the Lyee methodology, and that they have considerably complicated this methodology. That is, it is necessary to control repeated execution of the vectors in the pallets, and it is necessary to designate a way, time and the like for transferring the execution from one pallet to another (including transfer between different basic structures). For this purpose, there have been introduced pallet functions (controlling executions in the pallet), routing vectors (determining the pallet to be executed next), and a pallet chain relation (controlling executions between the pallets).

However, using the Lyee-calculus, we do not need any more to specify the order according to which the pallets will be executed, the order according to which the vectors of each pallet will be executed, how and when to pass control from one pallet to another, etc. All such details will be, needless to say, naturally managed by the abstract machine of the Lyee-calculus in this paper. Consequently, a Basic Structure (Scenario Function) could be formalized as follows:

$$SF = W_{04} | W_{03} | W_{02}$$

That is, the process of a basic structure SF is a parallel process of processes of three pallets $W_{04}$, $W_{03}$, and $W_{02}$.

Notice that the order according to which $W_{04}$, $W_{03}$ and $W_{02}$ is no more important and the routing vectors that connect these pallets are also eliminated.

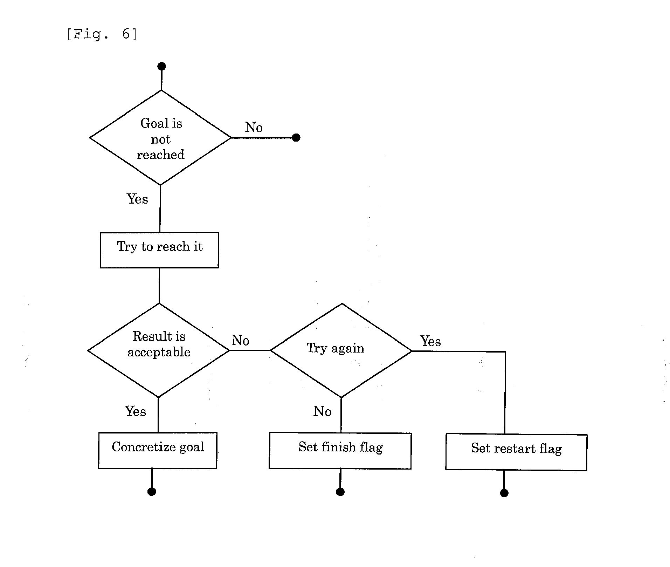

Lyee has established a simple program with a fixed structure (called a Predicate Vector in the Lyee terminology) that makes the structure of generated code uniform and independent of the requirement content. A pallet function as global program to control executions of vectors simply calls predicate vectors. The structure of a predicate vector is as shown in Fig. 6.

The goal of a predicate vector changes from one pallet to another.

<Pallet W$_{04}$>

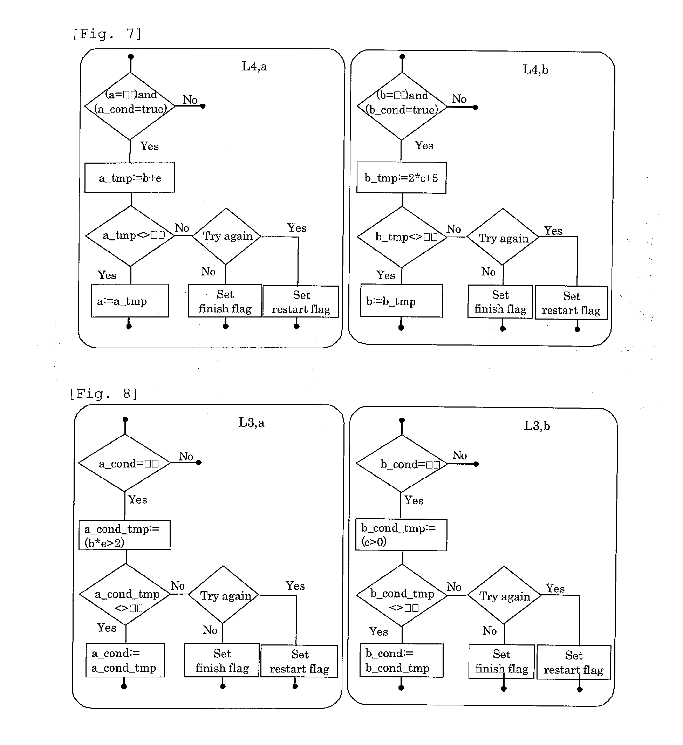

In the pallet W$_{04}$, the first goal is to give a value to a word according to its definition. The predicate vector that performs this function is referred to as L4. The predicate vectors of the words "a" and "b" in the example shown in Fig. 4, are as shown in Fig. 7.
Once there is no evolution in the calculation of the words, the Lyee generated code tries to output the words which will be the next goal. The predicate vector having a goal of outputting values is called as an output action element (output vector: 04).
Additionally, there is a structural action element (referred to as S4) that clears a region.

<Pallet W$_{02}$>

In pallet W$_{02}$, we find two predicate vectors having the goals of associating values with input words. The vectors include: an input action vector (referred to as I2) which inputs values to a main memory (outside of the Lyee program region); and L2 which checks attribute of a value and inputs it into the Lyee program region.

<Pallet W$_{03}$>

In pallet W$_{03}$, The goal of the predicate vector L3 is to compute a condition for executing the definition (i.e., L4) of the word, which are specified within requirements as shown in Fig. 8.
Finally, the Lyee program associated with the requirements given in Table 6 is as shown in Table 8.
One pallet function disposed in each pallet calls (activates) the predicate vectors in the pallet. The pallet functions are called by one pallet chain function disposed in the program. The pallet chain function calls the corresponding pallet function in accordance with designations by R4, R2, and R3 of the pallets. Meanings of other vector programs are as shown in comments in Table 8. A processing object of each predicate vector L4, L2, and L3 (referred to generically as a signification vector) is a word, and a processing object of the input/output vector (I2 and 04) and the structural vector (S4) is a set of words.
[Table 8]

| Pallet | Program | Comments |
|---|---|---|
| W$_{04}$ | Call S4 | Initialize memory area |
| | Do | |
| | Call L4 a | Calculate the definition of the word *a* |
| | Call L4 b | Calculate the definition of the word *b* |
| | while a fixed point is not reached | Repeat until a fixed point is reached |
| | Call O | Output the results |
| | Call R4 | Designate W$_{02}$ as the next route |
| W$_{02}$ | Call I2 | Input (to the memory) |
| | Do | |
| | Call L2 e | Input the word e |
| | Call L2 c | Input the word c |
| | while a fixed point is not reached | Repeat until a fixed point is reached |
| | Call R2 | Designate W$_{03}$ as the next route |
| W$_{03}$ | Do | |
| | Call L3 a | Calculate *a_cond* (the condition of the word *a)* |
| | Call L3 b | Calculate *b_cond* (the condition of the word b) |
| | while a fixed point is not reached | Repeat until a fixed point is reached |
| | Call R3 | Designate W$_{04}$ as the next route |

Now, using the Lyee-calculus, W$_{04}$, W$_{03}$ and W$_{02}$ can be specified as follows:
[eq. 20]

$$W_{04} = S4 \mid L4\_a \mid L4\_b \mid O4$$

$$W_{03} = L3\_a \mid L3\_b$$

$$W_{02} = L2\_e \mid L2\_c \mid I2$$

The $W_{04}$ process is a parallel process of processes S4, L4_a, L4_b, and O4.

The $W_{03}$ process is a parallel process of processes L3_a and L3_b.

The $W_{02}$ process is a parallel process of processes L2_e, L2_c, and I2.

The formal definition of the different vectors (L2, L3, L4, I2, 04, S4, etc.) will be given in the next section.

3.3 Process Route Diagrams

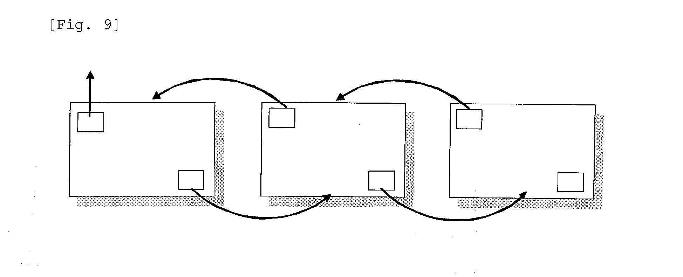

The Scenario Function presented in the previous section can be a complete program for a simple case of given requirements, particularly when all the input and output words belong to the same screen and there is no use of any database. If we need to input and output words that belong to databases or to different screens interconnected together, then the situation will be more complicated. For the sake of simplicity, we deal, in the sequel, only with the case when we have many screens. Suppose for instance that we have three interconnected screens, as shown in Fig. 9, allowing a user to navigate from one to another. Suppose in each one of them the user can input, compute and output words. Therefore, in the specification, the user must specify how these screens are interconnected.

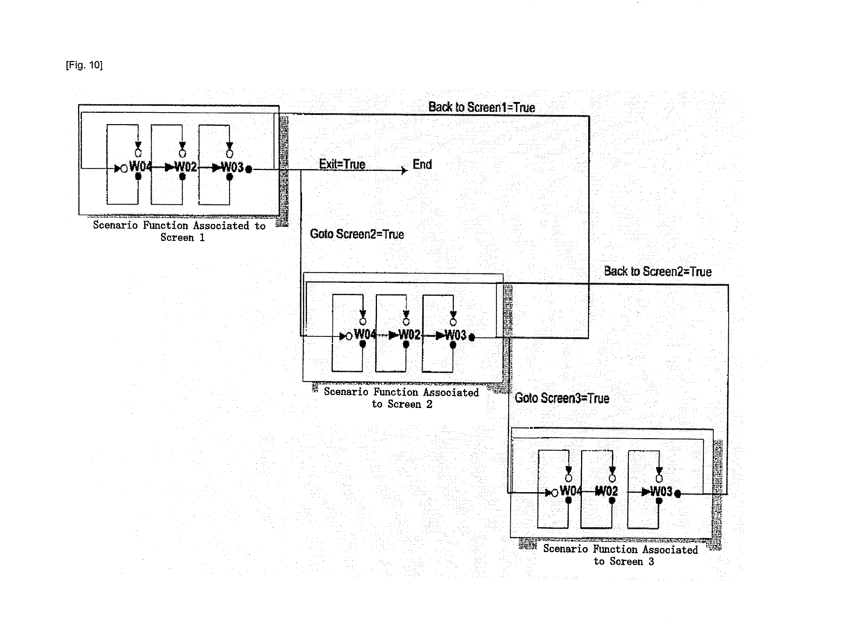

Furthermore, it is not convenient to define only one scenario function in which we compute all the words defined in all the screens. This is because in fact, some screens may not be visited for a given execution of the program and then the computation of the value of their words that have not been visited will be lost. For that reason, Lyee associates with each screen its owner scenario function that will be executed only if this screen is visited. The scenario functions associated with screens are connected together showing the move from one of them to another. In the Lyee terminology, many scenario functions connected together make up a Process Route Diagram as shown in Fig. 10.

Using the Lyee-calculus, we can formalize a screen $s_k$ as a process $\Phi(s_k)$ that control the execution of the process $SF(s_k)$ as follows:

[eq. 21]

$$\Phi(s_k) = SF(s_k) \triangleright [\iota^{s_k}?1].\Phi(s_k)$$

That is, the process $\Phi(s_k)$ behaves as the process $SF(s_k)$ (process having a basic structure of the processing relating to a screen $s_k$). When the process receives a true value in a channel $\iota^{sk}$, the process stops $SF(s_k)$, and behaves as the process $\Phi(s_k)$. In actual movement, the control process $\Phi(s_k)$ actives the process SF $(s_k)$. When the control process $\Phi(s_k)$ receives a signal on the channel $\iota^{sk}$ associated to the screen $s_k$ (i.e., when the screen $s_k$ is reactivated), the control process itself is reactivated. Therefore, when the control process $\Phi(s_k)$ is reactivated, $SF(S_k)$ once ends, and is reactivated, thereby returning to a fresh instance.

A concrete example will be given later in this paper to show how the function $\Phi(s_k)$ works.

3.4 Lyee Program

To summarize, a Lyee program by the Lyee methodology has the following structure. The Lyee program contains several process route diagrams (PRD). Each of them is a set of interconnected scenario functions (SF). Each scenario function contains three interconnected pallets $W_{02}$, $W_{03}$ and $W_{04}$. Finally, the pallet contains predicate vectors.

Since the predicate vectors are modules of minimum units of the Lyee program, the predicate vectors are also referred to as atomic vectors. The predicate vectors include signification vectors (generic term of L2, L3, and L4) and action vectors (generic term of I2, O4, S4, R2, R3, and R4).

As a control module which controls the execution of these predicate vectors, each pallet is provided with a pallet function. As a module which controls the execution of the pallet function, a program is provided with one pallet chain function.

Using the Lyee-calculus, a Lyee program P containing the screens $s_1$, ... , $s_k$, is formalized as follows:

[eq. 22]

$$\mathcal{P}(s_1, \ldots, s_k) = \Psi(s_1, \ldots, s_k)/\mathcal{L}(s_1, \ldots, s_k)$$

where L $(s_1, \ldots , s_k)$ is the set of input and output channels. This restricts $(s_1, \ldots , s_k)$ to communicate with the environment only on channels in L$(s_1, \ldots , s_k)$.

The function $\Psi$ is defined as follows:

[eq. 23]

$$\Psi(s_1, \ldots, s_k) = \left( \big|_{s \in \{s_1, \ldots, s_k\}} \left[\imath^s ?1\right] . \Phi(s) \right) \triangleright \left[\imath^{s_0} ?1\right] . nil$$

This function $\Psi$ activates a process $\Phi(s)$ in order to activate SF(s) corresponding to a screen $s_k$ whenever a true value is received on the corresponding channel $\imath^s$ corresponding to the screen s (s is one of screens $s_1$ ..., $s_k$). The channel $\imath^s$ formalizes a button or a menu item that a user may use to activate the corresponding screen. When the function $\Psi$ receives a true value on a channel $\imath^{s0}$, the function $\Psi$ kills all other processes, and the function itself also ends (turns to nil). The channel $\imath^{s0}$ formalizes the Exit button (or a corresponding menu item).

Consequently, a Lyee system can be viewed as a collection of independent concurrent processes that communicate with each other to compute the desired output words. In contrast with conventional sequential view of Lyee methodology, there is no need for all routing vectors. The role of the control function is largely simplified. There is no need of working memory areas, etc. More details about $\Psi (S_1, \ldots , S_k)$ together with concrete examples will be given in the sequel.

The next section gives a more detailed and complete formalization of the Lyee methodology.

4. Formalization of the Lyee Methodology

There will be described how to automatically generate software from a simple user requirement by use of the Lyee-calculus.

It is assumed that the user requirement includes k screens $\{s_1, \ldots, s_k\}$. It is also assumed that each screen includes a set of statements. In this case, each statement has a format (w, e, c, InOut, type), wherein: w denotes a word name; e denotes a definition expression; c denotes a condition for execution of the definition expression; InOut designates whether the word is input, output, both, or neither (the value i is used for input, the value o is for output, the value io is for both input and output, and an empty field is used for neither input nor output); and type denotes an attribute (type) of a value (e.g., type B is assigned as a symbol indicating a button).

To define the program P $(s_1, \ldots, s_k)$ on this requirement, signification and action vectors (processes) are formalized as shown in the following table.

First, undefined symbols used in the formalization will be described.

Let Use(e) denotes the set of words used in the expression e. For instance, Use(a * b + 1) ={a, b}.

Also, F(S) is a function which takes a set of input values for variable S and which returns a set of receiving actions to

input those values.
[eq. 24]

$$\mathcal{F}(\emptyset) = \emptyset$$
$$\mathcal{F}(\{x\} \cup A) = \{\imath_4^x ? x\} \cup \mathcal{F}(A)$$

The above has the following meaning:

When there is not any input value ((F(0)), there is not any receiving action (0 is an empty set).

A receiving action (F({x}∪A)) having input values x and A is a union set of receiving actions, one of which is to receive a value of x on the channel of

[eq. 25]

$$\imath_4^x$$

and the other is a receiving action F(A) to receive input A.

The signification vectors are shown in Table 9.

[Table 9]

| Vector | Comments |
|---|---|
| $L_4$ $(x, e) =$ <br><br> $[\imath_3^x ? 1].$ <br><br> $[\mathcal{F}(Use(e))].$ <br><br> $[\jmath_4^x ! e].$ <br><br> *nil* | < $L_4$ of Word x which Definition is e (InOut attribute of its Statement is '0') > <br><br> Wait to receive the value true (1) on the channel $\imath_3^x$ (from $L_3$) <br> Wait to receive the vale of all the *Use* of e form the memory <br> Evaluate e and put the result in the memory cell of x finish |
| $L_3$ $(x, c) =$ <br><br> $[\mathcal{F}(Use(c))].$ <br><br> $[\imath_3^x ! c].$ <br><br> *nil* | < $L_3$ of Word x which Condition is c (InOut attribute of its Statement is 'o' or 'io') > <br> Wait to receive the value of all the *Use* of c from the memory <br> evaluate c (its value is Boolean) and send the result on the channel $\imath_3^x$ (to $L_4$) <br> finish |

(continued)

| Vector | Comments |
|---|---|
| L₂ (x) =  $$[\imath_2^x?x].$$  $$[\jmath_4^x!x].$$  *nil* | < L$_2$ of Word *x* (InOut attribute of its Statement is 'i') > <br> Wait to receive the value of *x* on the channel $\imath_2^x$ (from the input vector) <br> Send the value of *x* on the channel of $\jmath_4^x$ (save the value of *x* in the memory cell of *x*) <br> finish |

The action vectors are shown in Table 10.
[Table 10]

| Input Vector | Comments |
|---|---|
| I₂ (x) =  $$[d_x?x].$$  $$[\imath_2^x!x].$$  *nil* | <I$_2$ of input words group which element is {x} > Wait to receive a value for Word xon the input channel d $_x$ <br> Send the value of xon the channel $\imath_2^x$ (to L$_2$) finish |
| **Output Vector** | **Comments** |
| O₄ (x) =  $$[\imath_4^x?x].$$  $$[d_x!x].$$  *nil* | < O$_4$ of output words group having the element {x} > Wait to receive the value of *x* from the memory <br> Send the value of *x* on the output channel d$_x$ finish |
| **Structural Vector** | **Comments** |
| S₄ (x) =  $$[\jmath_4^x?y].S_4^x(y)$$  $S_4^x(y) =$  $$[\jmath_4^x?z].S_4^x(z)+$$  $$[\imath_4^x!y].S_4^x(y)$$ | < S$_4$ of Word *x*> <br> Wait to receive any value. Cannot send any value until you receive any value. Once receive a value (it is you receive any value. Once receive a value (it is called 'initialization'), save the value and behave as $S_4^x(y)$. <br> If you receive a new value *z*, behave as $S_4^x(z)$ (change the content of the cell x). <br> If you send *y* which has been saved, behave as $S_4^x(y)$ (do not change the content of the cell *x*). <br> In other word, once you receive and save a value, you can send it other than receiving and saving. |
| **Routing Vector** | **Comments** |
| R ₃(b, e, s) =  $$[d_b?clik].$$  $$[\mathcal{F}(Use(e))].$$  $$[\imath^s!e].$$  *nil* | < R $_3$ of Word *b* (Button *b*) > Wait until the button *b* be pushed <br> Evaluate the condition of the button *b* <br> Send the result to the screen s (in other words, activate s if *e*= 1 (true) finish |

Among the vectors, $S_4$ is a memory cell which holds a value as described in 2.2, and it is a smart cell having an ability to "prevent the content from being accessed until the value is initialized (an initial value is received)".

A routing vector is a naturally unnecessary process in the Lyee-calculus, but the element is described in order to show a way of formalization by the Lyee-calculus.

Pallet:

The three pallets $W_{02}$, $W_{03}$ and $W_{04}$ of a given screen s are formalized as follows:

[eq. 26]

$$
\begin{aligned}
W_{02}(s) &= |_{(w,*,*,i,\overline{B})\in s}\ I_2(w)\ |_{(w,*,*,i,\overline{B})\in s}\ L_2(w) \\
W_{03}(s) &= |_{(w,*,c,*,\overline{B})\in s}\ L_3(w,c)\ |_{(w,e,c,i,*,B)\in s}\ R_3(w,c,e) \\
W_{04}(s) &= |_{(w,*,*,*,\overline{B})\in s}\ S_4(w)\ |_{(w,e,*,*,\overline{B})\in s}L_4(w,e))\ |_{(w,*,*,o,*,*)\in s}\ O_4(w)
\end{aligned}
$$

where
[eq. 27]

$$\overline{B}$$

denotes any type except B (B denotes the button), that means complementary of B, and * denotes anything.

Scenario Function:

The scenario function, SF(s)of the screen s is formalized as follows:

[eq. 28]

$$SF(s) = W_{04}(s)\ |\ W_{03}(s)\ |\ W_{02}(s)$$

Control Function:

The control function attached to a screen s, is formalized as follows:

[eq. 29]

$$\Phi(s) = SF(s) \rhd [\imath^{s_k}?1].\Phi(s)$$

The control function attached to a set of screens is formalized as follows:
[eq. 30]

$$\Psi(s_1, \ldots, s_k) = \left( \big|_{s \in \{s_1, \ldots, s_k\}} \left[\imath^s ? 1.\right] \Phi(s) \right) \triangleright \left[\imath^{s_0} ? 1\right].nil$$

We suppose that $s_0$ is the screen that we find when we exit the program (exit screen that does not belong to the screens of the program itself).
Here, roles of the control function are summarized as follows.
[Table 11]

| Control Function | | function |
|---|---|---|
| $\Psi$ | Place one for each program | • It is activated by the end-user and is killed when it receives the true value from Finish button being pushed.<br>• When it receives the value true from a button pushed by the end-user, it activates the $\Phi$ corresponding to the button.<br>• When it receives the value true from Finish button, it kills all $\Phi$s before kills itself. |
| $\Phi$ | Place one for each SF | • It is activated and killed by $\Psi$.<br>• When it receives the value true on the designated channels from a button being pushed by the end-use, it activates the corresponding SF. |

In this paper, as one of methods of realizing the Lyee-calculus, a single SF is disposed in a screen, and such single SF is formalized so as to contain all processes of input/output and calculation relating to the corresponding screen. Therefore, a single control function $\Phi$ of the SF is disposed to a single screen. However, it is also a possible alternative to formalize the screen so that a plurality of SFs and control functions $\Phi$ are disposed to a single screen. Implementation methods may be determined by efficiency of the program.

Lyee Program:

Finally, the Lyee program $P(s_1, \ldots, s_k)$ associated with the requirement containing the screens $s_1, \ldots, s_k$ is as follows:
[eq. 31]

$$\mathcal{P}(s_1, \ldots, s_k) = \Psi(s_1, \ldots, s_k) / \mathcal{L}(s_1, \ldots, s_k)$$

where the set $L(s_1, \ldots, s_k)$ contains all the input and output channels and it is defined as follows:
[eq. 32]

$$\mathcal{L}(s_1, \ldots, s_k) = (\bigcup_{(w,*,*,i/o,*)\in s_k} \{d_w\}) \cup \{\imath^{s_1}\}$$

The meaning of i/o is that this field has to contain the value i, o or io. We suppose also that $s_1$ is the first screen that appears when the user runs this program.

[Example 1]

5. Case Study 1

In this section, we give a concrete example and describe step by step how a Lyee program progress in order to compute words within our Lyee-calculus.

The example that we present contains only one screen (another example with two screens is given in the appendix).

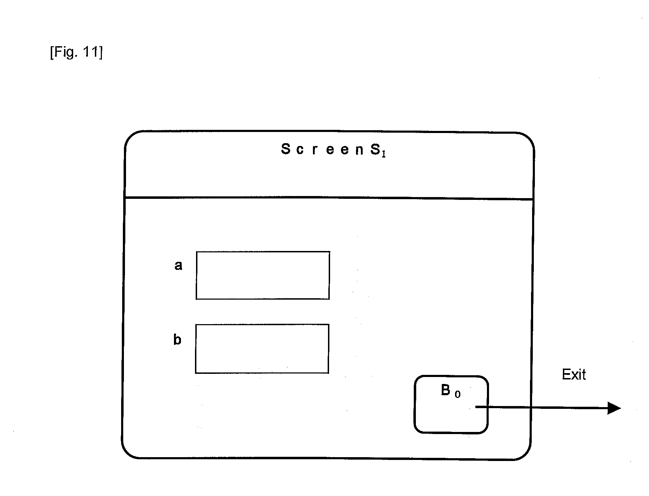

As shown by the requirement given in Table 12, a user can input a word a, waits for the value of b and then exit the screen by pushing the button $B_0$. Fig. 11 illustrates such a screen.

[Table 12]

| Word | Definition | Condition | IO | type |
|------|-----------|-----------|-----|------|
| a | | | i | real |
| b | 2*a | a>0 | o | real |
| $B_0$ | $S_0$ | Click | i | B |

This screen $s_1$ is composed from three statements:

[eq. 33]

$$s_1 = \{(a,,,i,real), (b, 2*a, a > 0, o, real), (B_0, s_0, Click, B)\}$$

According to the definition of a generic Lyee program given in the previous section, the Lyee program associated to the requirement given by Table 12 is as follows:

[eq. 34]

$$SF(s_1) = W_{04}(s_1) \mid W_{03}(s_1) \mid W_{02}(s_1)$$

$$\Phi(s_1) = SF(s_1) \rhd [\imath^{s_1}?1].\Phi(s_1)$$

$$\Psi(s_1) = \left([\imath^{s_1}?1].\Phi(s_1)\right) \rhd [\imath^{s_0}?1].nil$$

$$\mathcal{L}(s_1) = \{d_a, d_b, d_{B_0}, \imath^{s_1}\}$$

$$\mathcal{P}(s_1) = \Psi(s_1)/\mathcal{L}(s_1)$$

wherein $W_{02}$ ($s_1$) , $W_{03}$ ($s_1$) and $W_{04}$ ($s_1$) are as shown hereafter. As described above, since the process of $R_3$ is not essential in the Lyee-calculus, it can be omitted.

[Table 13]

| $W_{02}(s_1) = L_2$ (a) \| $I_2$ (a) | |
|---|---|
| $L_2(a) \quad = \quad [\imath_2^a?a].$ <br> $[\jmath_4^a!a].$ <br> $nil$ | $I_2(a) \quad = \quad [d_a?a].$ <br> $[\imath_2^a!a].$ <br> $nil$ |

| $W_{03}(s_1) = L_3$ (b, a > 0) $R_3$ ($B_0$, click, $s_0$) | |
|---|---|
| $L_3(b, a > 0) \quad = \quad [\imath_4^a?a].$ <br> $[\imath_3^b!(a > 0)].$ <br> $nil$ | $R_3(B_0, click, s_0) \quad = \quad [d_{B_0}?click].$ <br> $[\imath^{s_0}!1].$ <br> $nil$ |

| $W_{04}$ ($s_1$) = $S_4$ (a) \| $S_4$(b) \| $L_4$ (b,2*a) \| $O_4$(b) | | | |
|---|---|---|---|
| $S_4(a) \quad = \quad [\jmath_4^a?a].$ <br> $\quad\quad S_4^a(a)$ <br> $S_4(b) \quad = \quad [\jmath_4^b?b].$ <br> $\quad\quad S_4^b(b)$ | $L_4(b, 2*a) \quad = \quad [\imath_3^b?1].$ <br> $[\imath_4^a?a].$ <br> $[\jmath_4^b!(2*a)].$ <br> $nil$ | $O_4(b) \quad = \quad [\imath_4^b?b].$ <br> $[d_b!b].$ <br> $nil$ | |

Suppose now, that the end-user (environment) of this program $P(S_1)$ wants to perform the following sequence of actions : runs the program (activates the screen $s_1$), gives the value 7 to the word a, waits for the value of the word b and then exits the program by pushing the button $B_0$. This end-user's comportment can be captured by the following process s:

[Table 14]

| Process | Comments |
|---|---|
| $\mathcal{E} \quad = \quad [\imath^{s_1}!1].\mathcal{E}_1$ | Activate the program (screen $s_1$) |
| $\varepsilon_1 = [d_a!7].\varepsilon_2$ | Give the value 7 to the word *a* |
| $\varepsilon_2 = [d_b?x].\varepsilon_3$ | Get the value of the word *b* |
| $\varepsilon_3 = [d_{B0}!click].nil$ | Click the button $B_0$ to exit |

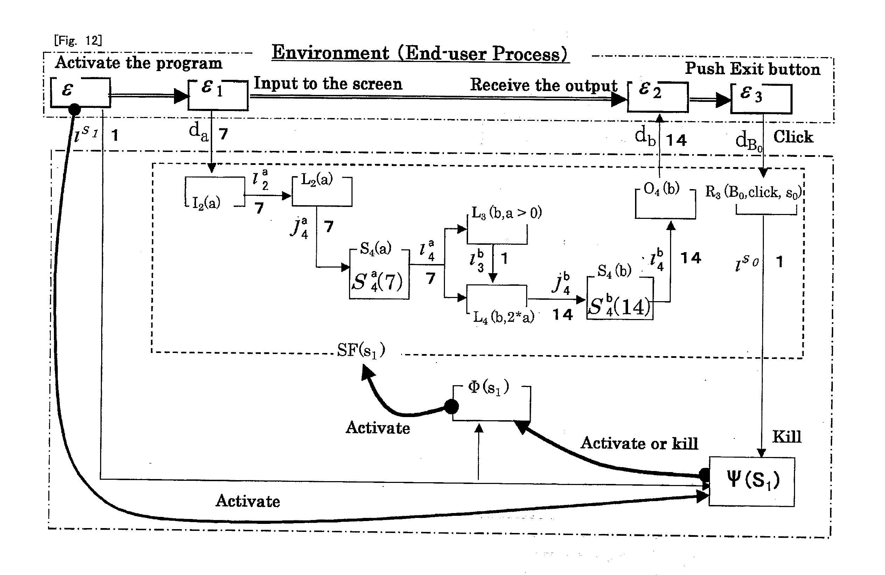

Fig. 12 shows the process of the program $P(S_1)$ and the end-user's process by the Lyee-calculus described above.

Let's see now how the program $P(S_1)$ interacts with this environment to reach the desired goal. In other words, we trace the program $P(S_1)$ progress when executed in parallel with the program $\varepsilon$ that incorporates the end-user actions, i.e., we look for the behaviors of $P(s_1) \mid \varepsilon$. The steps of this process are as shown hereafter. In the process definition, comments are added with definitions which account for grounds on which the left side of an equation mark is replaced with the right side. A comment is also added to a portion where synchronization (transmission and reception of the value are simultaneously established on the same channel) occurs by the interaction between the processes. An underlined portion shows a synchronized transmission and reception actions.

[Table 15]

$\mathcal{P}(s_1) \mid \mathcal{E}$

$=$

$\Psi(s_1)/\mathcal{L}(s_1) \mid [\imath^{s_1}!1].\mathcal{E}_1$ 　　　　　　　　　　　　 $\langle$By definition of P and $\varepsilon\rangle$
　　　　　　　　　　　　　　　　　　　　　　　　　　 $\langle$By definition of $\Psi\rangle$

$=$

$\big( ([\imath^{s_1}?1].\Phi(s_1)) \triangleright [\imath^{s_0}?1].nil \big)/\mathcal{L}(s_1) \mid [\underline{\imath^{s_1}!1}].\mathcal{E}_1$

$\overset{\tau}{\longrightarrow}$ $\langle$Synchronization-End-user activates the program by running the screen $s_1\rangle$

$\big( \Phi(s_1) \triangleright [\imath^{s_0}?1].nil \big)/\mathcal{L}(s_1) \mid \mathcal{E}_1$

$=$

$\big( (SF(s_1) \triangleright [\imath^{s_1}?1].\Phi(s_1)) \triangleright [\imath^{s_0}?1].nil \big)/\mathcal{L}(s_1) \mid [d_a!7].\mathcal{E}_2$ 　 $\langle$By definition of $\Phi$ and $\varepsilon_1\rangle$
　　　　　　　　　　　　　　　　　　　　　　　　　　　　　　　　 By definition of S F$\rangle$
$=$ 　　　　　　　　　　　　　　　　　　　　　　　　　　　　　 $\langle$By definition of $W_{02}$ and
　　　　　　　　　　　　　　　　　　　　　　　　　　　　　　　　 consequently I $_2\rangle$
$\big( ((W_{04}(s_1) \mid W_{02}(s_1) \mid W_{03}(s_1)) \triangleright [\imath^{s_1}?1].\Phi(s_1)) \triangleright [\imath^{s_0}?1].nil \big)/\mathcal{L}(s_1) \mid [d_a!7].\mathcal{E}_2$

$=$

$\big( ((W_{04}(s_1) \mid L_2(a) \mid ([\underline{d_a?a}].[\imath_2^a!a].nil) \mid W_{03}(s_1)) \triangleright \dots ) \triangleright \dots \big)/\mathcal{L}(s_1) \mid [\underline{d_a!7}].\mathcal{E}_2$

$\overset{\tau}{\longrightarrow}$ $\langle$Synchronization-Through I $_2$ end-user gives the value 7 to the word a$\rangle$

$\big( ((W_{04}(s_1) \mid L_2(a) \mid ([\imath_2^a!7].nil) \mid W_{03}(s_1)) \triangleright \dots ) \triangleright \dots \big)/\mathcal{L}(s_1) \mid \mathcal{E}_2$

$=$ 　　　　　　　　　　　　　　　　　　　　　　　　　　　　　　 $\langle$By definition of L $_2\rangle$

$\big( ((W_{04}(s_1) \mid ([\underline{\imath_2^a?a}].[\imath_4^a!a].nil) \mid ([\imath_2^a!7].nil) \mid W_{03}(s_1)) \triangleright \dots ) \triangleright \dots \big)/\mathcal{L}(s_1) \mid \mathcal{E}_2$

$\overset{\tau}{\longrightarrow}$ $\langle$Synchronization-The value 7 of *a* is communicated to L $_2$ ( a ) $\rangle$

(continued)

$$\Big(\big((W_{04}(s_1) \mid ([\jmath_4^a!7].nil) \mid W_{03}(s_1)) \triangleright \dots \big) \triangleright \dots \Big)/\mathcal{L}(s_1) \mid \mathcal{E}_2$$
$$=$$

$$\Big((S_4(a) \mid S_4(b) \mid L_4(b, 2*a) \mid O_4(b) \mid ([\jmath_4^a!7].nil) \mid W_{03}(s_1)) \triangleright \dots \Big)/\mathcal{L}(s_1) \mid \mathcal{E}_2$$

⟨By definition of $W_{04}$⟩
⟨By definition of $S_4$ (a)⟩

$$=$$

$$\Big(\big((\underline{[\jmath_4^a?a]}.S_4^a(a)) \mid S_4(b) \mid L_4(b, 2*a) \mid O_4(b) \mid (\underline{[\jmath_4^a!7]}.nil) \mid W_{03}(s_1)\big) \triangleright \dots$$

$$\xrightarrow{\tau} \quad \text{⟨Synchronization-The value 7 of a is sent from L}_2\text{ (a) and stored in the memory⟩}$$

$$\Big((S_4^a(7) \mid S_4(b) \mid L_4(b, 2*a) \mid O_4(b) \mid W_{03}(s_1)) \triangleright \dots$$

$$=$$

$$\Big(\big((\underline{[\jmath_4^a?z]}.S_4^a(z) + [\imath_4^a!7].S_4^a(7)) \mid \dots \mid (L_3(b, a > 0) \mid R_3(B_0, click, s_0))\big) \triangleright \dots$$

⟨By definition of $S_4^a(7)$ and $W_{03}$⟩
⟨By definition of $L_3$⟩

$$=$$

$$\Big(\big(([\jmath_4^a?z].S_4^a(z) + \underline{[\imath_4^a!7]}.S_4^a(7)) \mid \dots \mid ((\underline{[\imath_4^a?a]}.[\imath_3^b!(a > 0)].nil) \mid \dots$$

$$\xrightarrow{\tau} \quad \text{⟨Synchronization —The value of a is communicated to L}_3\text{ (b) to compute the } b \text{ condition⟩}$$

$$\Big((S_4^a(7) \mid S_4(b) \mid L_4(b, 2*a) \mid O_4(b) \mid ([\imath_3^b!(7 > 0)].nil) \mid \dots$$

$$=$$

⟨By definition of $L_4$ and evaluation of (7 > 0)⟩

$$\Big((S_4^a(7) \mid S_4(b) \mid (\underline{[\imath_3^b?1]}.[\imath_4^a?a].[\jmath_4^b!(2*a)].nil) \mid O_4(b) \mid (\underline{[\imath_3^b!1]}.nil) \mid \dots$$

[Table 16]

$$\xrightarrow{\tau} \quad \text{⟨Synchronization- The } b \text{ condition is evaluated and communicated to L}_4\text{ (b) to activate the computation of } b\rangle$$

$$\Big((S_4^a(7) \mid S_4(\hat{b}) \mid ([\imath_4^a?a].[\jmath_4^b!(2*a)].nil) \mid O_4(b) \mid \dots$$

$$=$$

⟨By definition of $S_4^a(7)$⟩

$$\Big(\big(([\jmath_4^a?z].S_4^a(z) + \underline{[\imath_4^a!7]}.S_4^a(7)) \mid S_4(b) \mid ([\imath_4^a?a].[\jmath_4^b!(2*a)].nil) \mid O_4(b) \mid \dots$$

$$\xrightarrow{\tau} \quad \text{⟨Synchronization-The value of a is communicated to L}_4\rangle$$

$$\Big((S_4^a(7) \mid S_4(b) \mid ([\jmath_4^b!(2*7)].nil) \mid O_4(b) \mid R_3(B_0, click, s_0)) \triangleright \dots$$

$$=$$

⟨By definition of $S_4$ (b) and evaluation of (2* 7)⟩

$$\Big((S_4^a(7) \mid (\underline{[\jmath_4^b?b]}.S_4^b(b)) \mid (\underline{[\jmath_4^b!(14)]}.nil) \mid O_4(b) \mid R_3(B_0, click, s_0)) \triangleright \dots$$

$$\xrightarrow{\tau} \quad \text{⟨Synchronization—The value of b (14) is sent from L}_4\text{ (b) stored in the memory⟩}$$

$$\Big((S_4^a(7) \mid S_4^b(14) \mid O_4(b) \mid R_3(B_0, click, s_0)) \triangleright \dots$$

$$=$$

⟨By the definition of $S_4^b(14)$ and $O_4$ (b)⟩

$$\Big((S_4^a(7) \mid ([\jmath_4^b?z].S_4^b(z) + \underline{[\imath_4^b!14]}.S_4^b(14)) \mid (\underline{[\imath_4^b?b]}.[d_b!b].nil) \mid R_3(B_0, click, s_0)) \triangleright \dots$$

$$\xrightarrow{\tau} \quad \text{⟨Synchronization-The value of b (14) is communicated to }O_4\rangle$$

$$\Big((S_4^a(7) \mid S_4^b(14) \mid ([d_b!14].nil) \mid R_3(B_0, click, s_0)) \triangleright \dots \Big)/\mathcal{L}(s_1) \mid \mathcal{E}_2$$

$$=$$

⟨By definition of $\varepsilon_2$⟩

$$\Big((S_4^a(7) \mid S_4^b(14) \mid (\underline{[d_b!14]}.nil) \mid R_3(B_0, click, s_0)) \triangleright \dots \Big)/\mathcal{L}(s_1) \mid \underline{[d_b?x]}.\mathcal{E}_3$$

$$\xrightarrow{\tau} \quad \text{⟨Synchronization-The b value, stored in }O_4\text{, is communicated to the environment)}$$

$$\left( \left( S_4^a(7) \mid S_4^b(14) \mid R_3(B_0, click, s_0) \right) \triangleright \dots \right)/\mathcal{L}(s_1) \mid \mathcal{E}_3$$

$$= \qquad \langle \text{By definition of } R_3 \text{ and } \varepsilon_3 \rangle$$

$$\left( \left( S_4^a(7) \mid S_4^b(14) \mid \left( \underline{[d_{B_0}?click]}.[ı^{s_0}!1].nil \right) \right) \triangleright \dots \right)/\mathcal{L}(s_1) \mid \underline{[d_{B_0}!click]}.nil$$

$$\xrightarrow{\tau} \quad \langle \text{Synchronization-The end-user push button } B_0 \text{ to exit} \rangle$$

$$\left( \left( S_4^a(7) \mid S_4^b(14) \mid \left( \underline{[ı^{s_0}!1]}.nil \right) \right) \triangleright [ı^{s_1}?1].\Phi(s_1) \right) \triangleright \underline{[ı^{s_0}?1]}.nil \right)/\mathcal{L}(s_1)$$

$$\xrightarrow{\tau} \quad \langle \text{Synchronization-The system ends its execution} \rangle nil$$

To summarize, here are the main steps of the program progress:

The end-user sends a command for activating the program to thereby activate a control function $\Psi(s_1)$. The control function $\Psi(s_1)$ activates a control function $\Phi(s_1)$. The control function $(s_1)$ activates an initial screen $s_1$ and SF $(s_1)$, whereby the program is activated.

[eq. 35]

$$\left( \left( \underline{[ı^{s_1}?1]}.\Phi(s_1) \right) \triangleright [ı^{s_0}?1].nil \right)/\mathcal{L}(s_1) \mid \underline{[ı^{s_1}!1]}.\mathcal{E}_1$$

When the end-user gives (transmits) a value "7" to the word a, $I_2(a)$ in SF $(s_1)$ receives the value 7.

[eq. 36]

$$\left( \left( \left( W_{04}(s_1) \mid L_2(a) \mid \left( \underline{[d_a?a]}.[ı_2^a!a].nil \right) \mid W_{03}(s_1) \right) \triangleright \dots \right) \triangleright \dots \right)/\mathcal{L}(s_1) \mid \underline{[d_a!7]}.\mathcal{E}_2$$

The value 7 of the word a is communicated to $L_2(a)$ by $I_2(a)$.

[eq. 37]

$$\left( \left( \left( W_{04}(s_1) \mid \left( \underline{[ı_2^a?a]}.[ȷ_4^a!a].nil \right) \mid \left( \underline{[ı_2^a!7]}.nil \right) \mid W_{03}(s_1) \right) \triangleright \dots \right) \triangleright \dots \right)/\mathcal{L}(s_1) \mid \mathcal{E}_2$$

The value 7 of the word a communicated by $L_2(a)$ is stored in the memory, i.e., $S_4(a)$ (the initial value is stored in $S_4(a)$, and the memory is initialized).

[eq. 38]

$$\left( \left( \left( \underline{[ȷ_4^a?a]}.S_4^a(a) \right) \mid S_4(b) \mid L_4(b, 2*a) \mid O_4(b) \mid \left( \underline{[ȷ_4^a!7]}.nil \right) \mid W_{03}(s_1) \right) \triangleright \dots \right.$$

The value 7 of a is communicated from the initialized memory $S_4$ of a to $L_3(b, a>0)$ to compute the calculation conditions of b.

[eq. 39]

$$\left( \, \left( \left( [\jmath_4^a?z].S_4^a(z) + [\imath_4^a!7].S_4^a(7) \right) \mid \ldots \mid \left( [\imath_4^a?a].[\imath_3^b!(a>0)].nil \right) \mid \ldots \right.$$

The calculation conditions of b are evaluated (a > 0 is judged to be true (1)), and a value of 1 is communicated to $L_4$ (b, 2*a).
[eq. 40]

$$\left( \, \left( S_4^a(7) \mid S_4(b) \mid \left( [\imath_3^b?1].[\imath_4^a?a].[\jmath_4^b!(2*a)].nil \right) \mid O_4(b) \mid \left( [\imath_3^b!1].nil \right) \mid \ldots \right.$$

The value 7 of a is communicated to $L_4$(b, 2*a) from the memory $S_4$ which holds the value 7.
[eq. 41]

$$\left( \, \left( \left( [\jmath_4^a?z].S_4^a(z) + [\imath_4^a!7].S_4^a(7) \right) \mid S_4(b) \mid \left( [\imath_4^a?a].[\jmath_4^b!(2*a)].nil \right) \mid O_4(b) \mid \ldots \right.$$

A definition expression "2*a" of b is calculated, and a value 14 of b is stored in the memory, i.e., $S_4$ (b) ($S_4$ (b) is initialized).
[eq. 42]

$$\left( \, \left( S_4^a(7) \mid \left( [\jmath_4^b?b].S_4^b(b) \right) \mid \left( [\jmath_4^b!(14)].nil \right) \mid O_4(b) \mid R_3(B_0, click, s_0) \right) \triangleright \ldots$$

The value 14 of b is communicated from the memory $S_4$ to the output process $O_4$(b).
[eq. 43]

$$\left( \, \left( S_4^a(7) \mid \left( [\jmath_4^b?z].S_4^b(z) + [\imath_4^b!14].S_4^b(14) \right) \mid \left( [\imath_4^b?b].[d_b!b].nil \right) \mid R_3(B_0, click, s_0) \right) \triangleright \ldots$$

10. The value of b is communicated to the environment by $O_4$, and the end-user receives the value of b. At this time, processes belonging to SF($s_1$) being activated are $S_4$ which holds values of a and b, and $R_3(B_0$, click, $s_0$).
[eq. 44]

$$\left( \, \left( S_4^a(7) \mid S_4^b(14) \mid \left( [d_b!14].nil \right) \mid R_3(B_0, click, s_0) \right) \triangleright \ldots \right) / \mathcal{L}(s_1) \mid [d_b?x].\mathcal{E}_3$$

11. The end-user pushes button $B_0$ to exit, and R3 ($B_0$, click, $s_0$) receives the value click, and evaluates its own calculation conditions to transmit a true value of 1 to a control function $\Psi$ ($S_1$). The control function $\Psi$ ($S_1$) which has received the true value of 1 ends $\Phi$ ($S_1$) before the function itself ends, and $\Phi$ ($S_1$) ends SF ($S_1$) before $\Phi$ ($S_1$) itself

ends.

[eq. 45]

$$\left( (S_4^a(7) \mid S_4^b(\bar{1}4) \mid (\underline{[d_{B_0}?click]}.[\imath^{s_0}!1].nil)) \rhd \dots \right)/\mathcal{L}(s_1) \mid \underline{[d_{B_0}!click]}.nil$$

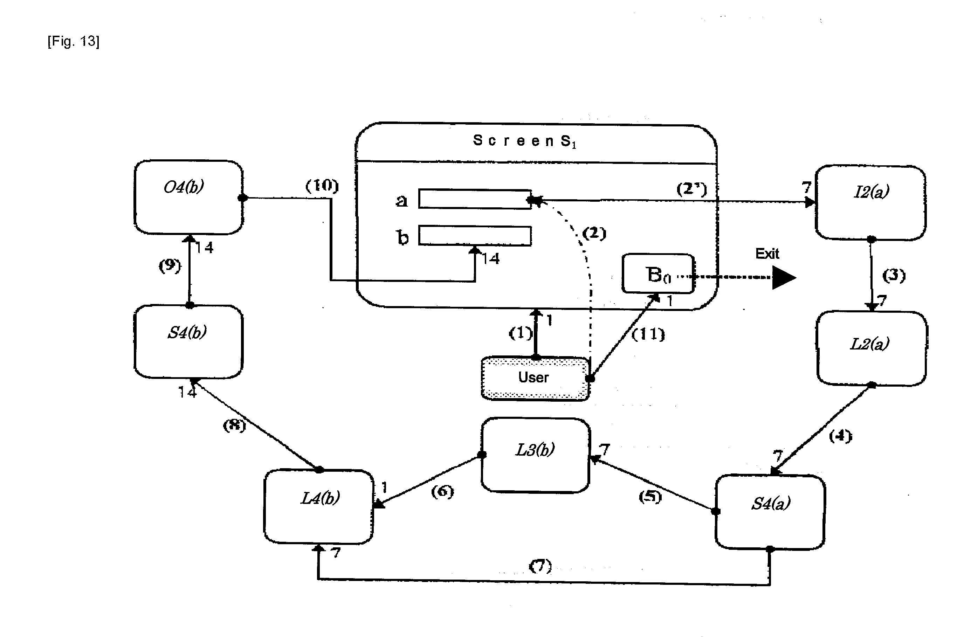

Fig. 13 illustrates each of these steps.

The parenthesized numerals correspond to the above description of each step. The numerals that do not have any parentheses indicate values to be transmitted/received.

Furthermore, each transition could be validated by a proof. For instance, there is the transition of the following process (corresponding to the step 1). The synchronization occurs between $P(s_1)$ and $\varepsilon$ (transmission and reception of the program activation command), and process transition is represented such that the process shifts to a parallel process of $P(s_1)$ and $\varepsilon_1$.

[eq. 46]

$$\left( \mathcal{P}(s_1) \mid \mathcal{E} \right) \xrightarrow{\tau} \left( \mathcal{P}_1(s_1) \mid \mathcal{E}_1 \right)$$

where $P(s_1)$ is as follows.

[eq. 47]

$$\mathcal{P}_1(s_1) = (\Phi(s_1) \rhd [\imath^{s_0}?1].nil)/\mathcal{L}(s_1)$$

The above is justified by the following proof by use of the rule of Table 5:

[eq. 48]

$$R_|^\tau : \cfrac{R_/ : \cfrac{R_\rhd^l : \cfrac{R_? : \cfrac{1 \in [\![1]\!]}{[\imath^{s_1}?1].\Phi(s_1) \xrightarrow{\imath^{s_1}?1} \Phi(s_1)}}{\Psi(s_1) \xrightarrow{\imath^{s_1}?1} \Phi(s_1) \rhd [\imath^{s_0}?1].nil}}{\mathcal{P}(s_1) \xrightarrow{\imath^{s_1}?1} \mathcal{P}_1(s_1)} \qquad R_! : \cfrac{1 \in [\![1]\!]}{\mathcal{E} \xrightarrow{\imath^{s_1}!1} \mathcal{E}_1}}{\left( \mathcal{P}(s_1) \mid \mathcal{E} \right) \xrightarrow{\tau} \left( \mathcal{P}_1(s_1) \mid \mathcal{E}_1 \right)}$$

6. Conclusion

In this paper, first, we have defined the formal process algebra, called Lyee-calculus, that easily and naturally supports the basic concepts of the Lyee methodology. In fact, this calculus can be seen as an abstract machine which is more suitable to support the Lyee methodology concepts than the Von Newman one. This machine considers a program as a set of molecules that interact together to produce a final result. Secondly, we have shown how this calculus can formalize and simplify both the Lyee vectors together with the whole software generation process. Actually, the routing vectors are no longer needed. Moreover, any pallet function is not unnecessary, and the role of the control function is largely simplified.

We have formalized the whole process of the automatic generation of Lyee software generation. This formalization offers to this methodology a formal semantics that allows one to clearly understand the concepts behind this methodology. Besides, this formal description will be an inevitable start point for many interesting analysis on diverse aspects of this methodology. For instance, to optimize the Lyee generated software or the software generation processes, we need a formal proof that the optimized program is equivalent to its original version. Formal equivalence checking or more generally model checking can be elegantly achieved when using process algebra.

As future work, we want to more investigate the semantics of Lyee methodology in order to make it simpler and to generate, from requirements, more reliable and optimized code. For the optimization end, we intend to define a congruence relation between processes of Lyee-calculus and then using it to prove the correctness of all the eventual optimizations.

[Example 2]

<Appendix>

Case Study 2 - Two screens

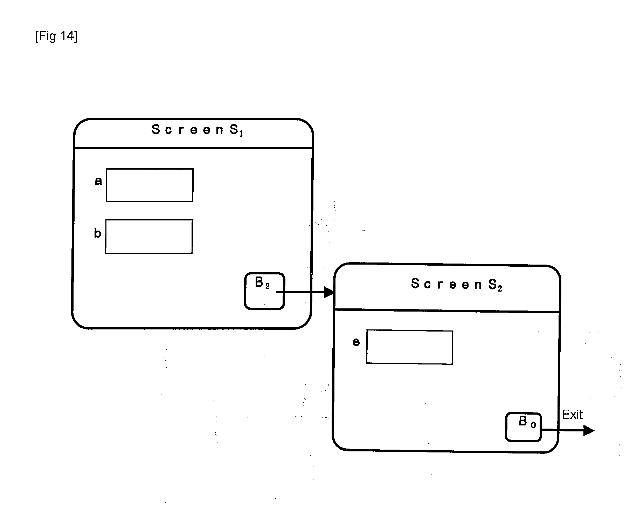

To show the interaction between many screens, a program constituted of two screens will be described. Fig. 14 is a diagram showing the program screens. When this program is activated, the screen $S_1$ is displayed. In the screen $S_1$, the user inputs the word a, and waits until the value of the word b is output. When the button $B_2$ is pushed, the screen $S_2$ is displayed, and the user waits until the value of the word b is output. When the button $B_0$ is pushed in the screen $S_2$, the program ends.

When statements of requirements of the program of Fig. 14 are summarized, the requirement of the screen $S_1$ is shown in Table 17, and the requirement of the screen $S_2$ is shown in Table 18.

[Table 17]

| Word | Definition | Condition | IO | ... |
|------|------------|-----------|-----|-----|
| a | | | i | ... |
| b | 2*a | a>0 | o | ... |
| $B_2$ | $S_2$ | Click | i | ... |

[Table 18]

| Word | Definition | Condition | IO | ... |
|------|------------|-----------|-----|-----|
| e | 1+b | b>0 | o | ... |
| $B_0$ | $S_0$ | Click | i | ... |

According to the definition of a generic Lyee program given in the previous section, the Lyee program associated to the requirement given by Tables 17 and 18 is as follows:

[eq. 49]

$$SF(s_1) = W_{04}(s_1) \mid W_{03}(s_1) \mid W_{02}(s_1)$$

$$SF(s_2) = W_{04}(s_1) \mid W_{03}(s_1)$$

Notice that there is no $W_{02}$ for the screen $s_2$ since it does not contain input words other than buttons.
[eq. 50]

$$\Phi(s_1) = SF(s_1) \triangleright [\imath^{s_1}?1].\Phi(s_1)$$

$$\Phi(s_2) = SF(s_2) \triangleright [\imath^{s_2}?1].\Phi(s_2)$$

$$\Psi(s_1, s_2) = ([\imath^{s_1}?1].\Phi(s_1) \mid [\imath^{s_2}?1].\Phi(s_2)) \triangleright [\imath^{s_0}?1].nil$$

$$\mathcal{L}(s_1, s_2) = \{d_a, d_b, d_e, d_{B_0}, d_{B_2}\}$$

$$\mathcal{P}(s_1, s_2) = \Psi(s_1, s_2)/\mathcal{L}(s_1, s_2)$$

wherein $W_{02}(S_1)$, $W_{03}(S_1)$, $W_{04}(S_1)$, $W_{03}(S_2)$, and $W_{04}(S_2)$ are
defined as follows. Since the process of $R_3$ is not essential in the Lyee-calculus in the same manner as in Case Study 1, the process may be omitted.
[Table 19]

| $W_{02}(S_1) = L_2(a) \mid I_2(a)$ | |
|---|---|
| $L_2(a) = [\imath_2^a?a].[\imath_4^a!a].nil$ | $I_2(a) = [d_a?a].[\imath_2^a!a].nil$ |

[Table 20]

| $W_{03}(s_1) = L_3(b, a > 0) \mid R_3(B_2 \ click, s_2)$ | |
|---|---|
| $L_3(b, a > 0) = [\imath_4^a?a].[\imath_3^b!(a > 0)].nil$ | $R_3(B_2, click, s_2) = [d_{B_2}?click].[\imath^{s_2}!1].nil$ |
| $W_{03}(s_2) = L_3(e, b > 0) \mid R_3(B_0, click, s_0)$ | |
| $L_3(e, b > 0) = [\imath_4^b?b].[\imath_3^e!(b > 0)].nil$ | $R_3(B_0, click, s_0) = [d_{B_0}?click].[\imath^{s_0}!1].nil$ |

[Table 21]

| $W_{04}(s_1) = s_4(a)) \,|s_4(b)\,|L_4(b, 2 * a)\,|\,O_4(b)$ | | |
|---|---|---|
| $S_4(a) = [j_4^a?a].$ $S_4^a(y)$ $S_4(b) = [j_4^b?b].$ $S_4^b(y)$ | $L_4(b, 2*a) = [\iota_3^b!1].$ $[\iota_4^a?a].$ $[j_4^b!(2*a)].$ $nil$ | $O_4(b) = [\iota_4^b?b].$ $[d_b!b].$ $nil$ |
| $W_{04}(s_2) = S_4(e)\,L_4(e, 1+b)|O_4(e)$ | | |
| $S_4(e) = [j_4^e?e].$ $S_4^e(y)$ | $L_4(e, 1+b) = [\iota_3^e!1].$ $[\iota_4^b?b].$ $[j_4^e!(1+b)].$ $nil$ | $O_4(e) = [\iota_4^e?e].$ $[d_e!e].$ $nil$ |

Suppose now, that the end-user (environment) of this program wants to perform the following sequence of actions to: run the program (activates the screen $s_1$); give the value 7 to the word a; wait until the value of the word b is obtained; push the button $B_2$ to go to the screen $S_2$; wait until the value e is obtained; and then exit the program by pushing the button $B_0$. This comportment can be captured by the following process ε:

[Table 22]

| End-user Action | Comments |
|---|---|
| $\mathcal{E} = [\iota^{s_1}!1].\mathcal{E}_1$ | Activate the program |
| $\varepsilon_1 = [d_a!7].\varepsilon_2$ | Give the value 7 to the word $a$ |
| $\varepsilon_2 = [d_b?b].\varepsilon_3$ | Wait for the value of the word $b$ |
| $\mathcal{E}_3 = [\iota^{B_2}!click].\mathcal{E}_4$ | Push the button $B_2$ to go to the screen 2 |
| $\varepsilon_4 = [d_e?e].\varepsilon_5$ | Wait for the value of the word $e$ |
| $\mathcal{E}_5 = [\iota^{B_0}!click].nil$ | Push the button $B_0$ to exit |

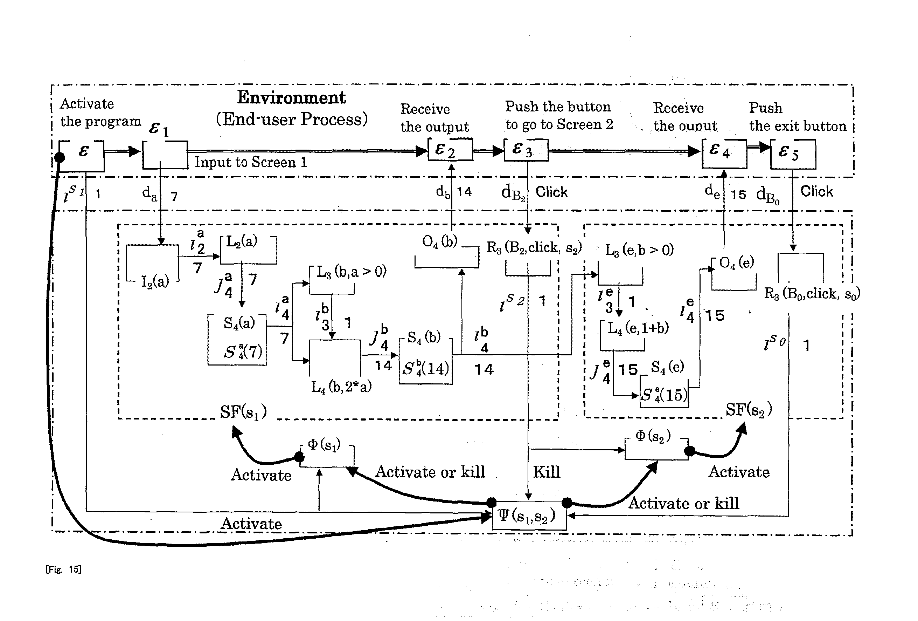

Fig. 15 shows the process of the program $P(S_1)$ by the Lyee-calculus and the end-user's process described above.

Main steps of the progress of the program are as follows.

The end-user sends a command for activation of the program to thereby activate a control function $\Psi(s_1, s_2)$. The control function $\Psi(s_1, s_2)$ activates a control function $\Phi(s_1)$, and the control function $\Phi(s_1)$ activates the program by running the screen $s_1$ and $SF(s_1)$.

Synchronization occurs (program activation command is transmitted/received) between $P(s_1, s_2)$ and ε, and the process shifts to a parallel process of $P_1(s_1, s_2)$ and $\varepsilon_1$.

[eq. 51]

$$P(s_1, s_2) \,\big|\, \mathcal{E} \xrightarrow{\tau} P_1(s_1, s_2) \,\big|\, \mathcal{E}_1$$

where:

[eq. 52]

$$\mathcal{P}_1(s_1, s_2) = (\Phi(s_1) \mid [\imath^{s_2}?1].\Phi(s_2) \triangleright [\imath^{s_0}?1].nil)/\mathcal{L}(s_1, s_2)$$

When the end-user gives (transmits) the value 7 to the word a, $I_2(a)$ in $SF(s_1)$ receives the value 7.

Synchronization occurs (value of the word a is transmitted/received) between $P_1(s_1, s_2)$ and $\varepsilon_1$, and the process shifts to a parallel process of $P_2(s_1, s_2)$ and $\varepsilon_2$.

[eq. 53]

$$\mathcal{P}_1(s_1, s_2) \mid \mathcal{E}_1 \xrightarrow{\tau} \mathcal{P}_2(s_1, s_2) \mid \mathcal{E}_2$$

where:

[eq. 54]

$$\mathcal{P}_2(s_1, s_2) = ((((W_{04}(s_1) \mid [\imath_2^a!7].nil \mid L_2(a) \mid W_{03}(s_1)) \triangleright [\imath^{s_1}?1].\Phi(s_1) \mid [\imath^{s_2}?1].\Phi(s_2)) \\ \triangleright [\imath^{s_0}?1].nil)/\mathcal{L}(s_1, s_2)$$

The value 7 of a is stored in the memory $S_4(a)$: This will be done in two steps. First, the value 7 of a is communicated to $L_2(a)$ and second $L_2(a)$ will communicate this value to the memory $S_4(a)$.

The first step is as follows: synchronization occurs in $P_2(s_1, s_2)$ (the value 7 of the word a is transmitted/received between $I_2(a)$ and $L_2(a)$), and the process shifts to a parallel process of $P_3(s_1, s_2)$ and $\varepsilon_2$.

[eq. 55]

$$\mathcal{P}_2(s_1, s_2) \mid \mathcal{E}_2 \xrightarrow{\tau} \mathcal{P}_3(s_1, s_2) \mid \mathcal{E}_2$$

where:

[eq. 56]

$$\mathcal{P}_3(s_1, s_2) = (((W_{04}(s_1) \mid [\jmath_4^a!7].nil \mid W_{03}(s_1)) \triangleright [\imath^{s_1}?1].\Phi(s_1) \mid [\imath^{s_2}?1].\Phi(s_2)) \\ \triangleright [\imath^{s_0}?1].nil)/\mathcal{L}(s_1, s_2)$$

In the second, the value 7 of a will be stored in the memory $S_4(a)$ of $W_{04}$ (the initial value is stored in $S_4(a)$ to thereby initialize the memory). Synchronization occurs in $P_3(S_1, S_2)$ (value 7 of the word a is transmitted/received between $L_2(a)$ and $S_4(a)$), and the process shifts to a parallel process of $P_4(s_1, s_2)$ and $\varepsilon_2$.

[eq. 57]

$$\mathcal{P}_3(s_1, s_2) \mid \mathcal{E}_2 \xrightarrow{\tau} \mathcal{P}_4(s_1, s_2) \mid \mathcal{E}_2$$

where:
[eq. 58]

$$\mathcal{P}_4(s_1, s_2) = (((S_4^a(7) \mid S_4(b) \mid L_4(b, 2*a) \mid O_4(b) \mid W_{03}(s_1)) \rhd [\imath^{s_1}?1].\Phi(s_1) \mid [\imath^{s_2}?1].\Phi(s_2))$$
$$\rhd [\imath^{s_0}?1].nil)/\mathcal{L}(s_1, s_2)$$

The value 7 of a is communicated from the initialized memory $S_4$ of a to $L_3$ (b, a>0) to compute the calculation conditions of b. Synchronization occurs in $P_4$ ($s_1$, $s_2$) (transmission/reception between $S_4$ (a) and $L_3$ (b, a>0)), and the process shifts to a parallel process of $P_5$ ($s_1$, $s_2$) and $\varepsilon_2$.
[eq. 59]

$$\mathcal{P}_4(s_1, s_2) \mid \mathcal{E}_2 \xrightarrow{\tau} \mathcal{P}_5(s_1, s_2) \mid \mathcal{E}_2$$

where:
[eq. 60]

$$\mathcal{P}_5(s_1, s_2) = (((S_4^a(7) \mid S_4(b) \mid L_4(b, 2*a) \mid O_4(b) \mid [\imath_3^b!(7 > 0)].nil \mid R_3(B_2, s_2, click))$$
$$\rhd [\imath^{s_1}?1].\Phi(s_1) \mid [\imath^{s_2}?1].\Phi(s_2)) \rhd [\imath^{s_0}?1].nil)/\mathcal{L}(s_1, s_2)$$

The calculation conditions of b is evaluated (a>0 is evaluated to be true (1)), and the value 1 is communicated to $L_4$(b, 2*a) . Synchronization occurs in $P_5$($s_1$, $s_2$) (transmission/reception of a true/false value 1 between $L_3$(b, a>0) and $L_4$(b, 2*a)), and the process shifts to a parallel process of $P_6$ ($s_1$, $s_2$ ) and $\varepsilon_2$.
[eq. 61]

$$\mathcal{P}_5(s_1, s_2) \mid \mathcal{E}_2 \xrightarrow{\tau} \mathcal{P}_6(s_1, s_2) \mid \mathcal{E}_2$$

where:
[eq. 62]

$$\mathcal{P}_6(s_1, s_2) = (((S_4^a(7) \mid S_4(b) \mid [j_4^a!(2 * a)].nil \mid O_4(b) \mid R_3(B_2, s_2, click)) \rhd [i^{s_1}?1].\Phi(s_1) \mid [i^{s_2}?1].\Phi(s_2)) \rhd [i^{s_0}?1].nil)/\mathcal{L}(s_1, s_2)$$

The value 7 of a is communicated from the memory $S_4$ of a to $L_4(b, 2*a)$, a definition "2*a" of b is computed, and a value 14 of b is stored in a memory $S_4(b)$ ($S_4(b)$ is initialized). Synchronization occurs in $P_6(s_1, s_2)$ (transmission/ reception between the memory $S_4$ of a and $L_4(b, 2*a)$ and between $L_4(b, 2*a)$ and the memory $S_4$ of b), and the process shifts to a parallel process of $P_7(s_1, s_2)$ and $\varepsilon_2$.

[eq. 63]

$$\mathcal{P}_6(s_1, s_2) \mid \mathcal{E}_2 \xrightarrow{\tau} \mathcal{P}_7(s_1, s_2) \mid \mathcal{E}_2$$

where:

[eq. 64]

$$\mathcal{P}_7(s_1, s_2) = (((S_4^a(7) \mid S_4^b(14) \mid O_4(b)) \rhd [i^{s_1}?1].nil \mid R_3(B_2, s_2, click)) \rhd [i^{s_1}?1].\Phi(s_1) \mid [i^{s_2}?1].\Phi(s_2)) \rhd [i^{s_0}?1].nil)/\mathcal{L}(s_1, s_2)$$

The value 14 of b is communicated from the memory $S_4$ of b to an output process $O_4$ (b). The b value is communicated to the environment by $O_4$ (b), and the end user receives the value of b. Synchronization occurs in $P_7$ $(s_1, s_2)$ (transmission/reception between $L_4$ (b, 2*a) and $O_4(b)$), synchronization occurs between $P_7$ $(s_1, s_2)$ and $\varepsilon_2$ (transmission/reception of value of word b), and the process shifts to $P_8(s_1, s_2)$ and $\varepsilon_3$.
At this time, processes belonging to $SF(s_1)$ being activated are $S_4$ which holds values of a and b, and R3($B_0$, click, $s_0$).

[eq. 65]

$$\mathcal{P}_7(s_1, s_2) \mid \mathcal{E}_2 \xrightarrow{\tau} \mathcal{P}_8(s_1, s_2) \mid \mathcal{E}_3$$

where:

[eq. 66]

$$\mathcal{P}_8(s_1, s_2) = (((S_4^a(7) \mid S_4^b(14) \mid R_3(B_2, s_2, click)) \rhd [i^{s_1}?1].\Phi(s_1) \mid [i^{s_2}?1].\Phi(s_2)) \rhd [i^{s_0}?1].nil)/\mathcal{L}(s_1, s_2)$$

The end-user pushes the button $B_2$ in the screen $s_1$ to go to screen $s_2$. R3 ($B_2$, click, $s_2$) receives the button-$B_2$-clicked value transmitted from $\varepsilon_3$, and R3($B_2$, click, $s_2$) evaluates its own calculation conditions to transmit a true value of 1 to a control function $\Psi$ ($s_1$, $s_2$) . The control function $\Psi$ ($s_1$, $s_2$) which has received the value 1 activates the control function $\Phi(s_2)$. The control function $\Phi(s_2)$ which has received the value 1 activates SF($s_2$) and the screen $s_2$. There occur: synchronization between $P_8$ ($s_1$, $s_2$) and $\varepsilon_3$ (transmission/reception of the value clicked by the button $B_2$) ; and synchronization in $P_8$ ($s_1$, $s_2$) (transmission/reception between R3 ($B_2$, click, $s_2$) and $\Psi$ ($s_1$, $s_2$) and the control function $\Phi(s_2)$)' and the process shifts to a parallel process of $P_9$ ($s_1$, $s_2$) and $\varepsilon_4$.

[eq. 67]

$$ \mathcal{P}_8(s_1, s_2) \mid \mathcal{E}_3 \xrightarrow{\tau} \mathcal{P}_9(s_1, s_2) \mid \mathcal{E}_4 $$

where:

[eq. 68]

$$ \mathcal{P}_9(s_1, s_2) = (((S_4^a(7) \mid S_4^b(14)) \triangleright [\imath^{s_1}?1].\Phi(s_1) \mid \Phi(s_2)) \triangleright [\imath^{s_0}?1].nil)/\mathcal{L}(s_1, s_2) $$

To compute the condition of e, the memory $S_4$ of b transmits value 14 to $L_3$(e, b>0). Synchronization occurs in $P_9(s_1$, $s_2)$ (transmission/reception between the memory $S_4$ of a and $L_3$(e, b>0)), and the process shifts to a parallel process of $P_{10}(s_1$, $s_2)$ and $\varepsilon_4$.

[eq. 69]

$$ \mathcal{P}_9(s_1, s_2) \mid \mathcal{E}_4 \xrightarrow{\tau} \mathcal{P}_{10}(s_1, s_2) \mid \mathcal{E}_4 $$

where:

[eq. 70]

$$ \mathcal{P}_{10}(s_1, s_2) = (((S_4^a(7) \mid S_4^b(14)) \triangleright [\imath^{s_1}?1].\Phi(s_1) \mid (W_{04}(s_2) \mid [\imath_3^e(14 > 0)].nil \mid $$
$$ R_3(B_0, s_0, click)) \triangleright [\imath^{s_1}?1].\Phi(s_1)) \triangleright [\imath^{s_0}?1].nil)/\mathcal{L}(s_1, s_2) $$

The calculation condition b>0 of e is evaluated to be true (1), a true value 1 is transmitted from $L_3$(e, b>0) to $L_4$ (e, 1+b), and the value of e is computed. Synchronization occurs in $P_{10}$ ($s_1$, $s_2$) (transmission/reception between $L_3$ (e, b>0) and $L_4$ (e, 1+b), and the process shifts to a parallel process of $P_{11}(s_1$, $s_2)$ and $\varepsilon_4$.

[eq. 71]

$$\mathcal{P}_{10}(s_1, s_2) \mid \mathcal{E}_4 \xrightarrow{\tau} \mathcal{P}_{11}(s_1, s_2) \mid \mathcal{E}_4$$

where:
[eq. 72]

$$\mathcal{P}_{11}(s_1, s_2) = (((S_4^a(7) \mid S_4^b(14)) \rhd [\imath^{s_1}?1].\Phi(s_1) \mid (S_4(e) \mid [\jmath_4^e(1+14)].nil \mid O_4(e) \mid R_3(B_0, s_0, click)) \rhd [\imath^{s_1}?1].\Phi(s_1)) \rhd [\imath^{s_0}?1].nil)/\mathcal{L}(s_1, s_2)$$

Store the value of e from $L_4$(e, 1+b) in the memory $S_4$(b) of e ($S_4$ (b) is initialized). Synchronization in $P_{11}$ ($s_1$, $s_2$) (transmission/reception between $L_4$(e) and the memory $S_4$ of e), and the process shifts to a parallel process of $P_{12}$($s_1$, $s_2$) and $\varepsilon_4$.
[eq. 73]

$$\mathcal{P}_{11}(s_1, s_2) \mid \mathcal{E}_4 \xrightarrow{\tau} \mathcal{P}_{12}(s_1, s_2) \mid \mathcal{E}_4$$

where:
[eq. 74]

$$\mathcal{P}_{12}(s_1, s_2) = (((S_4^a(7) \mid S_4^b(14)) \rhd [\imath^{s_1}?1].\Phi(s_1) \mid (S_4^e(15) \mid O_4(e) \mid R_3(B_0, s_0, click)) \rhd [\imath^{s_1}?1].\Phi(s_1)) \rhd [\imath^{s_0}?1].nil)/\mathcal{L}(s_1, s_2)$$

Transmit a value 15 of e from the memory $S_4$ (b) of e to $O_4$(e), and output the value of e from $O_4$(e) to the end-user $\varepsilon_4$. Synchronization occurs between $P_{11}$ ($s_1$, $s_2$) and $\varepsilon_4$ (transmission/reception of the value 14 of the word e), and the process shifts to a parallel process of $P_{12}$ ($s_1$, $s_2$) and $\varepsilon_5$.
[eq. 75]

$$\mathcal{P}_{11}(s_1, s_2) \mid \mathcal{E}_4 \xrightarrow{\tau} \mathcal{P}_{12}(s_1, s_2) \mid \mathcal{E}_5$$

where:
[eq. 76]

$$\mathcal{P}_{12}(s_1, s_2) = (((S_4^a(7) \mid S_4^b(14)) \triangleright [\imath^{s_1}?1].\Phi(s_1) \mid (S_4^e(15) \mid R_3(B_0, s_0, click)) \triangleright [\imath^{s_1}?1].\Phi(s_1)) \triangleright [\imath^{s_0}?1].nil)/\mathcal{L}(s_1, s_2)$$

The end-user pushes $B_0$ to exit the program, and R3($B_0$, click, $s_0$) receives the value click of the button $B_0$ from the end-user $\varepsilon_5$, and transmit the value to a control function $\psi(s_1, s_2)$. The control function $\psi(s_1, s_2)$ ends $\Phi(s_1)$ and $\Phi(s_2)$ before the function itself ends, and $\Phi(s_1)$ ends SF($s_1$) and $\Phi$ ($s_2$) ends SF ($s_2$), respectively, before they end. Synchronization occurs between $P_{12}$ ($s_1$, $s_2$) and $\varepsilon_5$ (transmission/reception of Click value), next synchronization occurs in $P_{12}$ ($s_1$, $s_2$) (transmission/reception of R3($B_0$, click, $s_0$), $\Psi$($s_1$, $s_2$), and the control functions $\Phi(s_1)$ and $\Phi(s_2)$), and all the processes shift to nil.

[eq. 77]

$$\mathcal{P}_{12}(s_1, s_2) \mid \mathcal{E}_5 \xrightarrow{\tau} (((S_4^a(7) \mid S_4^b(14)) \triangleright [\imath^{s_1}?1].\Phi(s_1) \mid (S_4^e(15) \mid [\imath^{s_0}?1].nil) \triangleright [\imath^{s_1}?1].\Phi(s_1)) \triangleright [\imath^{s_0}?1].nil)/\mathcal{L}(s_1, s_2)$$
$$\xrightarrow{\tau} nil$$

It is to be noted that the present invention is not limited to the above-described embodiments and examples, and various modifications are possible in a region of technical idea of the present invention. The present invention can be realized as, for example, a business method, a software development device, a software development support device, a software development and management device, software for realizing these functions in a computer, a recording medium or an special purpose machine on which the software is installed or the like. Furthermore, needless to say, as described above, the present invention can be realized as a method, software having such function, a device or a tool (including the software itself) on which the software is installed, or a system.

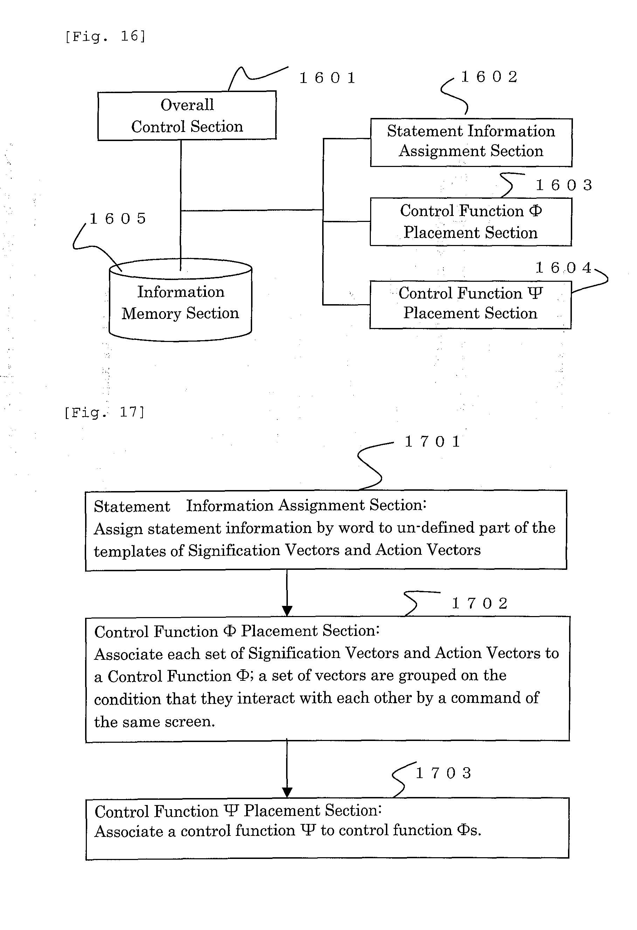

For example, Fig. 16 is a functional block diagram showing, as one of different embodiments of the present invention, a constitution including a function in a case where the present invention is embodied as one of a program (software) for producing "software of a development object", a program generation device, a program processing device, a tool (including both of tools as a device and software), a software development device, a software development support device, and a software development and management device. As shown in the drawing, the present invention is one of the program (software), the program generating device, the program processing device, the tool (including both of the tools as the device and the software), the software development device, the software development support device, and the software development and management device. The present invention includes an overall control section 1601, a statement information assignment section 1602, a control function $\Phi$ placement section 1603, a control function $\Psi$ placement section 1604, and an information memory section 1605.

The overall control section 1601 has a function of performing the whole operation control, timing control, input/output control and the like of the present program (software), the program generating device, the program processing device, the tool (including both of the tools as the device and the software), the software development device, the software development support device, and the software development and management device. The overall control section is realized as an special purpose chip having the function, an special purpose circuit, software (also including the software as the tool) for allowing the computer to perform the function, a recording medium in which the software is recorded, or a processing device, a management device, or a tool on which the recording medium is mounted.

The statement information assignment section 1602 has a function of assigning information into undefined parts of models of signification vectors ($L_2$, $L_3$, $L_4$) and action vectors ($I_2$, $O_4$, $S_4$), each of which is a module of a process cell having input/output channels based on the Lyee-calculus, and such assigned information is formed from a user requirement to be implemented as one program into statements, and each of such statements declared by word and grouped by logical record includes a word name, a definition expression, a condition for executing the definition expression, an input/output attribute, and an attribute of a value of the word. The section is realized as a special purpose chip or a special purpose circuit having the function, software (including software as a tool) for allowing a computer to perform the function, a recording medium in which the software is recorded, or a processing device, a management device or a tool on which the recording medium is mounted.

The control function $\Phi$ placement section 1603 has a function of associating control function modules $\Phi$ so that a single control function module $\Phi$ controls a single set of the signification vectors and the action vectors which are grouped on the set condition that interactions among it are caused by a command from the same screen. The section is realized as a special purpose chip or a special purpose circuit having the function, software (including software as a tool) for allowing a computer to perform the function, a recording medium in which the software is recorded, or a processing device, a management device or a tool on which the recording medium is mounted.

The control function $\Psi$ placement section 1604 has a function of associating a control function module $\Psi$ so that a sigle control function $\Psi$ controls the control function modules $\Phi$. The section is realized as a special purpose chip or a special purpose circuit having the function,, software (including software as a tool) for allowing a computer to perform the function, a recording medium in which the software is recorded, or a processing device, a management device or a tool on which the recording medium is mounted.

The information memory section 1605 is used as a storage of: program information; further various control information; the models of the signification vectors (L2, L3, L4) and the action vectors (I2, O4, S4), each of which is formed as a module of a process cell; the model of the control function module $\Phi$; the model of the control function module $\Psi$; a target program and the like. Moreover, the section is also used as a memory for temporary storage.

Fig. 17 is a flowchart showing an operation of the present invention implemented as one the followings which has the above-described constitution: program (software) a program generating device, a program processing device, a tool (including both of tools as the device and the software), a software development device, a software development support device, and a software development and management device.

As shown in the drawing, first the statement information assignment section 1602 inserts the information into the undefined parts of the models of the signification vectors (L2, L3, L4) and the action vectors (I2, O4, S4), each of which is formed as the module of the process cell having the input/output channels based on the Lyee-calculus; such information is formed from the user requirement to be implemented as one program into the statements; each of such statements declared by word and grouped by logical record includes a word name, a definition expression, a condition for executing the definition expression, an input/output attribute, and an attribute of a value of the word(step 1701).

Then, the control function $\Phi$ placement section 1603 associates control function modules $\Phi$ so that a single control function module $\Phi$ controls a single set of the signification vectors and the action vectors which are grouped on the set conditions that interactions among it are caused by the command from the same screen (step 1702).

Next, the control function $\Psi$ placement section 1604 associates one control function module $\Psi$ so that a single control function $\Psi$ controls the control function modules $\Phi$ (step 1703).

Therefore, according to the present invention constituted as described above, the requirement is defined on the basis of the theoretical system unique to the present invention, and the defined requirement is assigned into the undefined parts of the models of the signification vectors (L2, L3, L4) and the action vectors (I2, O4, S4), each of which is the module of the process cell having the structure unique to the present invention. Therefore, desired software can be obtained without humane/personal elements.

A program (software) for producing "software of a development object", a program generation device, a program processing device, a tool (including the tools as both the device and the software), a software development device, a software development support device, or a software development and management device as one of different embodying units of the present invention may include: statement information assignment means for assigning information into undefined parts of the models of the signification vectors ($L_2$, $L_3$, $L_4$) and the action vectors ($I_2$, $O_4$, $S_4$), each of which is formed into the module of a process cell having input/output channels based on the Lyee-calculus, where the information is formed from a user requirement to be mounted as one program into statements, and each of such statements declared by word and grouped by logical record includes a word name, a definition expression, a condition for executing the definition expression, an input/output attribute, and an attribute of a value of the word; control function $\Phi$ placement means for associating control function modules $\Phi$ so that a single control function module $\Phi$ controls a single set of the signification vectors and the action vectors grouped on the set condition that interactions among it are caused by a command from the same screen; and control function $\Psi$ placement means for associating one control function module $\Psi$ so as to control the control function modules $\Phi$.

The present invention is also realized by the software produced by the above-described "method of producing software of the development object", a recording medium on which the software is mounted, or a device (hardware) on which the software is mounted. In this case, the present invention may be constituted of: modules made from the models of the signification vectors ($L_2$, $L_3$, $L_4$) and the action vectors ($I_2$, $O_4$, $S_4$), each of which is the module of a process cell having input/output channels based the Lyee-calculus, and such modules are made by assigning information to undefined parts of such models, and such information is formed from a user requirement to be implemented as one program into statements, and each of such statements declared by word and grouped by logical record has a word name, a definition expression, a condition for executing the definition expression, an input/output attribute, and an attribute of a value of the word; control function modules $\Phi$ associated so that a single control function module $\Phi$ controls a set of the above mentioned modules grouped based on the set condition that interactions among it are caused by a command from the same screen; and a control function module $\Psi$ associated so that a single control function module $\Psi$ controls the control funcion modules $\Phi$.

Furthermore, the present invention is also realized as software which is a model of a software code for use in producing software by the above-described "method of producing the software of the development object", a recording medium on which the software is mounted, or a device (hardware) on which the software is mounted. In this case, the present invention may be constituted of: models of the signification vectors ($L_2$, $L_3$, $L_4$) and the action vectors ($I_2$, $O_4$, $S_4$), each of which is the module of a process cell having input/output channels based the Lyee-calculus, and such modules have undefined parts where information should be assigned, and such information is formed from a user requirement to be implemented as one program into statements, where each of such statements declared by word and grouped by logical record has a word name, a definition expression, a condition for executing the definition expression, an input/output attribute, and an attribute of a value of the; a model of control function module $\Phi$ which has a function that a single control function module $\Phi$ controls a set of the signification vectors and the action vectors which have the statement information in the unidentified parts, and such set is grouped based on the set condition that interactions among it are caused by a command from the same screen; and a model of control function module $\Psi$ which has a function that a single control function module $\Psi$ controls the control function modeuls $\Phi$.

Furthermore, the present invention can be realized by the above-described "method of producing the software of the development object" as any of a method of extracting information (document (paper, data)) extracted from a requirement, the information (document (paper, data)) extracted by such extraction method, a method of using the extracted information, an information recording medium on which these information is mounted, software in which an information extracting/using method is coded, and a recording medium/device (hardware) on which the software is mounted. In this case, the present invention may be realized as information extracted from a software development requirement, including: information formed from a user requirement to be mounted as one program into statements, each of which is declared by word and grouped by logical record and has a word name, a definition expression, a condition for executing the definition expression, an input/output attribute, and an attribute of a value of the word, and such information being to be assigned into undefined parts of the models of the signification vectors ($L_2$, $L_3$, $L_4$) and the action vectors ($I_2$, $O_4$, $S_4$), each of which is the module of a process cell having input/output channels based on the Lyee-calculus; information for associating control function modules $\Phi$ so that a single control function module $\Phi$ controls a single set of the signification vectors and the action vectors, which have the above mentioned information in their unidentified parts, and such set is grouped on the set condition that interactions among it are caused by a command from the same screen; and information for associating a control function module $\Psi$ so as to control the control function modules $\Phi$.

Furthermore, the present invention permits various modifications, additions, replacements, enlargements, reductions and the like in identical and equivalent regions of the technical idea. The value of the present invention is not lowered at all even in a case where the device, the method, the software, or the system produced using the present invention is mounted on a secondary product, and commercialized.

[Industrial Applicability]

A wide range of software problems related to different fields are efficiently dealt with, and development time, maintenance time and documentation volume can be considerably reduced by using Lyee (as much as 70 to 80%) as compared with conventional methodologies.

[Brief Description of the Drawings]

Fig. 1 is a schematic diagram showing a concept of Cell in one embodiment of the present invention;
Fig. 2 is a diagram showing Example of Interacting Processes in one embodiment of the present invention;
Fig. 3 is a schematic diagram showing a concept of requirement execution in one embodiment of the present invention;
Fig. 4 is a schematic diagram showing a concept of Lyee Pallets in one embodiment of the present invention;
Fig. 5 is a schematic diagram showing a concept of Basic Structure (Scenario Function) in one embodiment of the present invention;
Fig. 6 is a schematic diagram showing a concept of Predicate Vector in one embodiment of the present invention;
Fig. 7 is a schematic diagram showing concepts of the Predicate Vectors of L4_a and L4_b in one embodiment of the present invention;
Fig. 8 is a schematic diagram showing concepts of the Predicate Vectors of L3_a and L3_b in one embodiment of the present invention;
Fig. 9 is a schematic diagram showing a concept of Screen Interaction in one embodiment of the present invention;
Fig. 10 is a schematic diagram showing Processes Route Diagram in one embodiment of the present invention;
Fig. 11 is a schematic diagram showing Case Study - One Screen in one embodiment of the present invention (Embodiment 1);

Fig. 12 is an explanatory view showing a process of program $P(S_1)$ and end-user's process by the Lyee-calculus in one embodiment of the present invention;

Fig. 13 is a schematic diagram showing Interaction between processes in one embodiment of the present invention;

Fig. 14 is a schematic diagram showing Case Study - Two Screens in one embodiment of the present invention (Embodiment 2);

Fig. 15 is an explanatory view showing a process of program $P(S_1)$ and end-user's process by the Lyee-calculus in one embodiment of the present invention;

Fig. 16 is a functional block diagram showing a constitution of functional units in one of different embodiments of the present invention in a case where the present invention is embodied as one of a program (software) for producing "software of a development object", a program generation device, a program processing device, a tool (including both of tools as the device and the software), a software development device, a software development support device, and a software development and management device; and

Fig. 17 is a flowchart showing an operation of the present invention embodied as one of the program (software), the program generation device, the program processing device, the tool (including both of tools as the device and the software), the software development device, the software development support device, and the software development and management device constituted as described above in one embodiment of the present invention.

[Description of Symbols]

| | |
|---|---|
| W04 W04 | pallet |
| W02 W02 | pallet |
| W03 W03 | pallet |
| 1601 | overall control section |
| 1602 | statement information assignment section |
| 1603 | control function $\Phi$ placement section |
| 1604 | control function $\Psi$ placement section |
| 1605 | information memory section |

**Claims**

**1.** A software generation method comprising:

a first step for making a statement (defining) a user requirement to be mounted as one program by a word name, a definition equation, conditions for executing the definition equation, input/output attributes, and an attribute of a value of a word for every logical unit and for every word of the logical unit;

a second step for preparing, from said statement of the word unit, a signification vector $(L_2, L_3, L_4)$ and an action vector $(I_2, O_4, S_4)$ formed into a module as a process cell comprising an input/output channel by Lyee-calculus;

a third step for assembling said signification vector and said action vector into a set having set conditions that an interaction is caused by a command from an identical screen;

a fourth step for disposing one control function module $\Phi$ for every set; and

a fifth step for disposing a control function module $\Psi$ being one for every said program.

[Fig. 1]

in            **Cell**          out

[Fig. 2]

$P1$     $in^x$     $C^\alpha(5)$     $out^x$     $P2$

$s$          $s$

[Fig. 3]

```
if (b*e)>2
then a:=b+c; output(a);
end if
input(c);
if c>0
then b:=2*c+5; output(b);
end if
input(e);
```

Repeat until a fixed point
is reached

[Fig. 4]

Global fixed point

Partial fixed point        Partial fixed point          Partial fixed point

if a_cond
then a:=b+c;
end if

if b_cond
then b:=2*c+5;
end if

input(e);

input(c);

a_cond:=(b*e>2)

b_cond:=(c>0)

output(a);
output(b);

Global fixed point        Global fixed point

W04
Computation
and output

W02
Input

W03
Condition

[Fig. 5]

W04 → W02 → W03

[Fig. 6]

```
                    ●
                   ╱ ╲
                  ╱   ╲
                 ╱ Goal is ╲      No
                ╱   not     ╲────────────●
                ╲  reached  ╱
                 ╲         ╱
                  ╲       ╱
                   ╲     ╱
                    │
                   Yes
                    │
          ┌──────────────────┐
          │  Try to reach it  │
          └──────────────────┘
                    │
                   ╱ ╲                        ╱ ╲
                  ╱   ╲                      ╱   ╲
                 ╱ Result is ╲    No        ╱      ╲        Yes
                ╱ acceptable  ╲────────────╱  Try again ╲──────────┐
                ╲            ╱              ╲           ╱           │
                 ╲         ╱                 ╲        ╱             │
                  ╲       ╱                   ╲     ╱               │
                   │                           │                   │
                  Yes                         No                   │
                   │                           │                   │
         ┌──────────────────┐      ┌──────────────────┐   ┌──────────────────┐
         │  Concretize goal  │      │  Set finish flag  │   │  Set restart flag │
         └──────────────────┘      └──────────────────┘   └──────────────────┘
                   │                           │                   │
                   ●                           ●                   ●
```

[Fig. 7]

L4,a

(a=□□)and (a_cond=true) — No

Yes

a_tmp:=b+e

a_tmp<>□□ — No — Try again — Yes

Yes / No

a:=a_tmp / Set finish flag / Set restart flag

L4,b

(b=□□)and (b_cond=true) — No

Yes

b_tmp:=2*c+5

b_tmp<>□□ — No — Try again — Yes

Yes / No

b:=b_tmp / Set finish flag / Set restart flag

[Fig. 8]

L3,a

a_cond=□□ — No

Yes

a_cond_tmp:= (b*e>2)

a_cond_tmp <>□□ — No — Try again — Yes

Yes / No

a_cond:= a_cond_tmp / Set finish flag / Set restart flag

L3,b

b_cond=□□ — No

Yes

b_cond_tmp:= (c>0)

b_cond_tmp <>□□ — No — Try again — Yes

Yes / No

b_cond:= b_cond_tmp / Set finish flag / Set restart flag

[Fig. 9]

[Fig. 10]

Scenario Function Associated to
Screen 1

Back to Screen1=True

Exit=True → End

Goto Screen2=True

Scenario Function Associated
to Screen 2

Back to Screen2=True

Goto Screen3=True

Scenario Function Associated
to Screen 3

[Fig. 11]

Screen $S_1$

a

b

$B_0$

Exit

[Fig. 12]

Environment (End-user Process)

EP 1 693 745 A1

[Fig. 13]

EP 1 693 745 A1

[Fig 14]

Screen $S_1$

a

b

$B_2$

Screen $S_2$

e

$B_0$   Exit

**Environment (End-user Process)**

Activate the program $\mathcal{E}_1$

$\mathcal{E}$

$\mathcal{E}_1$    Input to Screen 1

Receive the output $\mathcal{E}_2$

Push the button to go to Screen 2 $\mathcal{E}_3$

Receive the ouput $\mathcal{E}_4$

Push the exit button $\mathcal{E}_5$

$l^{S_1}$   1    $d_a$   7     $d_b$ 14    $d_{B_2}$ Click    $d_e$ 15   $d_{B_0}$   Click

$l^a_2$   $L_2(a)$      $O_4(b)$   $R_3(B_2, \text{click}, s_2)$    $L_3(e, b>0)$    $O_4(e)$

7

$I_2(a)$

$J^a_4$   7

$l^a_4$   $L_3(b, a>0)$

$S_4(a)$    7    $l^b_3$   1

$S^a_4(7)$       $J^b_4$   $S_4(b)$    $l^b_4$

         14   $S^b_4(14)$   14

$L_4(b, 2*a)$

$l^{S_2}$   1

$l^e_3$   1

$L_4(e, 1+b)$

$l^e_4$   15

$J^e_4$   15   $S_4(e)$

$S^e_4(15)$

$l^{S_0}$   1

$R_3(B_0, \text{click}, s_0)$

$SF(s_1)$      $\Phi(s_1)$      $\Phi(s_2)$      $SF(s_2)$

Activate    Activate or kill    Kill     Activate

Activate or kill

Activate     $\Psi(s_1, s_2)$

[Fig. 15]

[Fig. 16]

1601

Overall
Control Section

1602

Statement Information
Assignment Section

1603

Control Function Φ
Placement Section

1605

Information
Memory Section

1604

Control Function Ψ
Placement Section

[Fig. 17]

1701

Statement   Information Assignment Section:
Assign statement information by word to un-defined part of the
templates of Signification Vectors and Action Vectors

1702

Control Function Φ Placement Section:
Associate each set of Signification Vectors and Action Vectors to
a Control Function Φ; a set of vectors are grouped on the
condition that they interact with each other by a command of
the same screen.

1703

Control Function Ψ Placement Section:
Associate a control function Ψ to control function Φs.

<table>
<tr><td colspan="2" align="center">**INTERNATIONAL SEARCH REPORT**</td><td>International application No.<br>PCT/JP2004/013855</td></tr>
</table>

A. CLASSIFICATION OF SUBJECT MATTER
   Int.Cl⁷ G06F9/44

According to International Patent Classification (IPC) or to both national classification and IPC

B. FIELDS SEARCHED

Minimum documentation searched (classification system followed by classification symbols)
   Int.Cl⁷ G06F9/44

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | "Lyee Update <2003. January>", [online], 30 January, 2003 (30.01.03), Software Seisan Gijutsu Kenkyujo, [retrieval date 13 December, 2004 (13.12.04)], Internet <URL:http://www.lyee. co.jp/jp/lyeeupdate/docs/vol004lyeeupdate.PDF> | 1 |
| Y | WO 2001/035213 A1 (Information System Development Institute), 17 May, 2001 (17.05.01), Full text; all drawings<br>& EP 1248189 A1 & CA 2359079 A<br>& AU 1305401 A & NZ 512711 A | 1 |

☒ Further documents are listed in the continuation of Box C. ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>15 December, 2004 (15.12.04) | Date of mailing of the international search report<br>11 January, 2005 (11.01.05) |
|---|---|
| Name and mailing address of the ISA/<br>   Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/013855 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-5651 A  (The Institute of Computer Based Software Methodology and Technology), 12 January, 2001 (12.01.01), Full text; all drawings & WO 2000/079385 A1     & CA 2414110 A & EP 1244006 A1 | 1 |
| A | JP 2002-312167 A  (Fujitsu Ltd.), 25 October, 2002 (25.10.02), Full text; all drawings (Family: none) | 1 |

Form PCT/ISA/210 (continuation of second sheet) (January 2004)